# EUROPEAN PATENT SPECIFICATION

(11) **EP 3 517 330 B1**
(45) Date of publication and mention of the grant of the patent: **11.05.2022**
(21) Application number: 17852928.5
(22) Date of filing: 13.09.2017
(51) Int. Cl.: B60H 3/00, B60H 1/00, B60H 3/02, B01D 53/26

(54) **VEHICLE AIR-CONDITIONING DEVICE**
FAHRZEUGKLIMATISIERUNGSVORRICHTUNG
DISPOSITIF DE CLIMATISATION DESTINÉ À UN VÉHICULE

(30) Priority: 22.09.2016 JP 2016184930
(43) Date of publication of application: 31.07.2019
(73) Proprietor: Marelli Cabin Comfort Japan Corporation, Saitama-shi, Saitama 331-8501 (JP)
(72) Inventor: NAKAMURA, Takashi, Saitama-city Saitama 331-8501 (JP); MARUYAMA, Tomohiro, Saitama-city Saitama 331-8501 (JP); KAWAI, Shusuke, Saitama-city Saitama 331-8501 (JP)
(74) Representative: Louis Pöhlau Lohrentz
(86) International application number: PCT/JP2017/033155
(87) International publication number: WO 2018/056151

(56) References cited:
- JP-A- 2001 246 931
- JP-A- 2004 314 759
- JP-A- 2013 067 320
- JP-A- 2013 193 636
- JP-A- 2014 100 925
- JP-A- 2016 101 835
- JP-A- 2016 155 516
- JP-A- 2016 155 516
- US-A- 5 509 275

## Description

### TECHNICAL FIELD

The present invention relates to a vehicular air conditioner.

### BACKGROUND ART

Patent document JP 2016 101835 A discloses a vehicular air conditioner of causing water components contained in air-conditioned air to be suppled into a vehicle compartment to be adsorbed to a desiccant material disposed on a flow passage of the air-conditioned air and dehumidify the air-conditioned air. Other air-conditioning systems according to the prior art are known from Patent documents JP 2004 314759 A, JP 2016 155516 A and US 5 509 275 A.

### PRIOR ART DOCUMENT

### PATENT DOCUMENT

This air conditioner according to Patent document JP 2016 101835 A is provided with a desiccant material that enables adsorption of water components contained in the air-conditioned air (air of a dehumidification target) and release of the adsorbed water components to a regeneration fluid (collection air) .

In this air conditioner, a flow passage of the regeneration fluid causing the water components to be desorbed from the desiccant material is provided to be separated from the flow passage of the air-conditioned air. The desiccant material is provided to bridge over between the flow passage of the air-conditioned air and the flow passage of the regeneration fluid.

In the air conditioner, the adsorption of the water components contained in the air-conditioned air is performed in an area of the desiccant material in contact with the air-conditioned air, and meanwhile, the desorption of the water components adsorbed in the desiccant material is performed in an area of the desiccant material in contact with the regeneration fluid. Thereby successive dehumidification of the air-conditioned air is made possible.

### SUMMARY OF THE INVENTION

### PROBLEM TO SOLUTION

In this air conditioner, the air warmed by radiation heat of an engine or the like is used as the regeneration fluid. An inlet port of the flow passage of the regeneration fluid is positioned within an engine room, and a discharge port of the flow passage of the regeneration fluid is positioned in a vehicle body lower part.

In a case of Patent Document JP 2016 101835 A, an opening is necessary in a sectioning wall for sectioning the engine room and the vehicle compartment to penetrate the flow passage of the regeneration fluid therethrough. However, positions where the openings can be disposed in the sectioning wall and the number of the openings are limited. Therefore, there is a limit to a freedom degree (mounting performance) of installation of the air conditioner. Therefore, it is required to improve the freedom degree of the installation of the air conditioner.

Therefore, it is required to improve a freedom degree (mounting performance) of installation of the air conditioner.

### SOLUTION TO PROBLEM

The present invention is an air conditioner according to claim 1.

### ADVANTAGEOUS EFFECT OF THE INVENTION

With this configuration as described above, it is not necessary to separately provide the opening part for the inlet port and the opening part for the discharge port of the collection air in the sectioning wall for sectioning the accommodating room of the drive source and the vehicle compartment. Accordingly, the freedom degree (mounting performance) of the installation of the air conditioner improves more than in a case of providing the new opening part in the sectioning wall.

### BRIEF DESCRIPTION OF THE DRAWINGS

FIG. 1A and FIG. 1B are diagrams explaining a vehicular air conditioner according to an example not according to the present invention.
FIG. 2 is a perspective view showing the air conditioner according to the example.
FIG. 3 is an enlarged cross section showing an essential part in the air conditioner according to the example.
FIG. 4A and FIG. 4B are diagrams showing an essential part in the air conditioner according to the example.
FIG. 5A and FIG. 5B are diagrams showing an essential part in the air conditioner according to the example .
FIG. 6 is a diagram explaining a location of a desiccant material according to the example.
FIG. 7A and FIG. 7B are diagrams explaining a configuration of the desiccant material according to the example.
FIG. 8 is a diagram explaining movement of water components in the desiccant material according to the example.
FIG. 9 is a diagram explaining a guide wall of regeneration fluid according to the example.
FIG. 10 is a diagram explaining a vehicular air conditioner according to the embodiment of the present invention.
FIG. 11A and FIG. 11B are schematic diagrams showing a part of flow passages of air provided in the vehicular air conditioner according to the embodiment.
FIG. 12 is a diagram showing an essential part in the vehicular air conditioner according to the embodiment.
FIG. 13A and FIG. 13B are diagrams showing a flow of air in an essential part in the vehicular air conditioner according to the embodiment.
FIG. 14A and FIG. 14B are diagrams showing a configuration of a desiccant material in the vehicular air conditioner according to the embodiment.

### DESCRIPTION

### [Example]

Hereinafter, an explanation will be made of an example not according to the present invention.

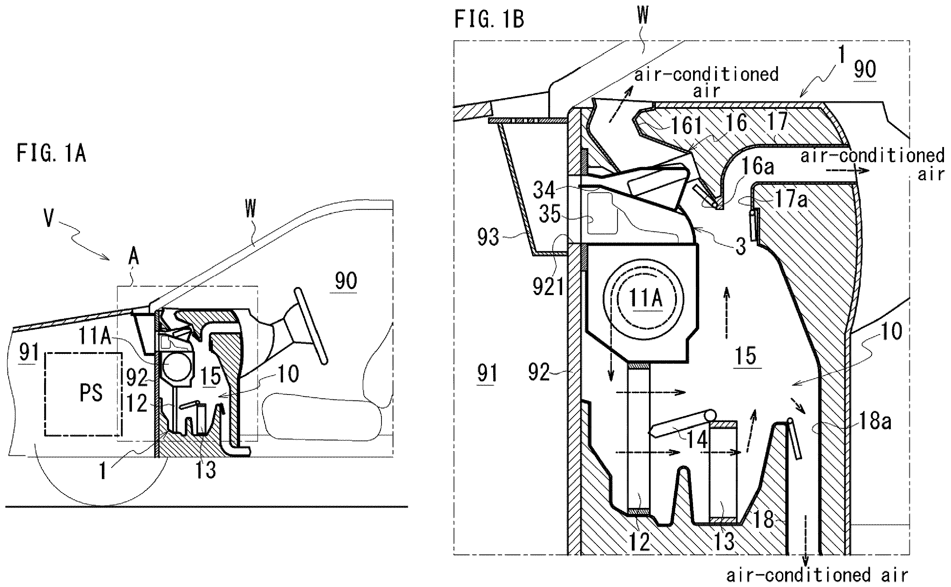

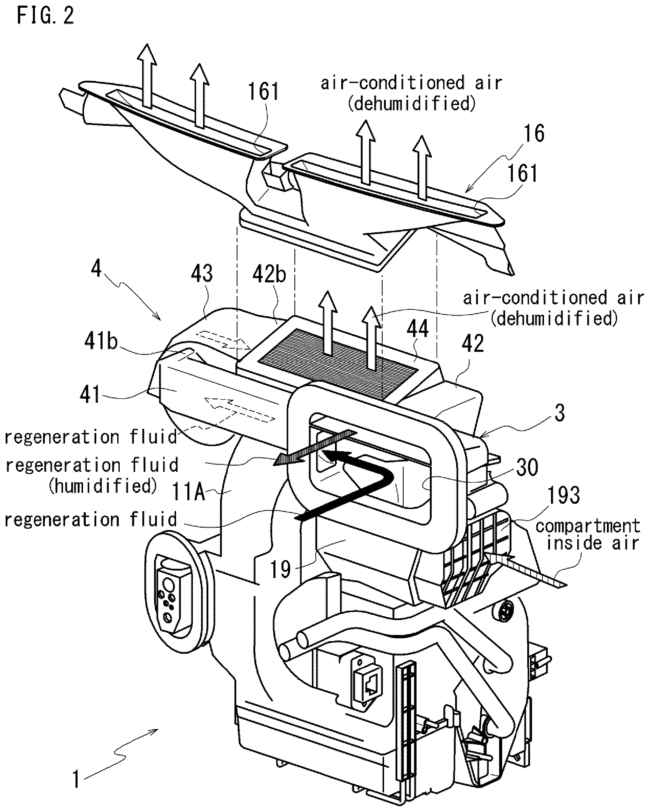

FIG. 1A and FIG. 1B are diagrams explaining a vehicular air conditioner 1. FIG. 1A is a diagram explaining a location of the vehicular air conditioner 1 in a vehicle V. FIG. 1B is an enlarged diagram in an area A in FIG. 1A and a diagram explaining an essential part of the air conditioner 1. FIG. 2 is a perspective view showing the air conditioner 1 as viewed from an accommodating room 91-side of an engine. FIG. 2 shows a portion of a blow port 161 in a defroster duct 16 in a state of being separated from the air conditioner 1.

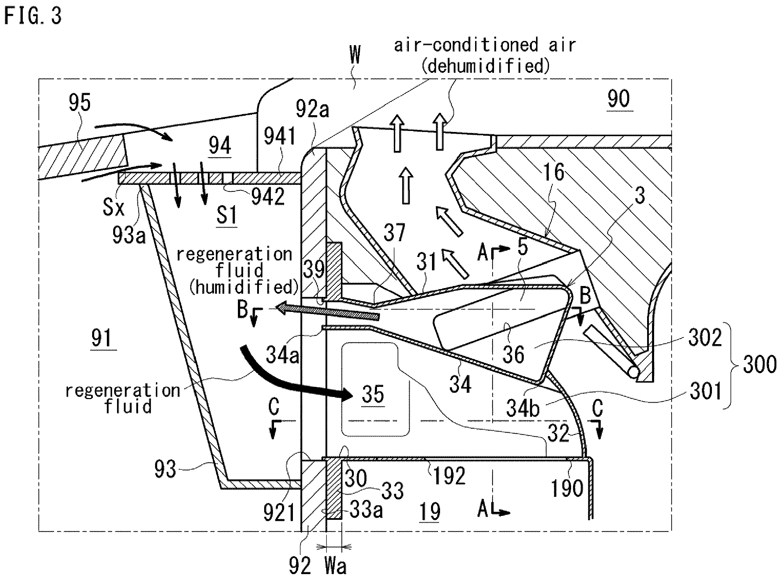

FIG. 3 is an enlarged cross section showing the periphery of an inlet part 3 of outside air in the air conditioner 1.

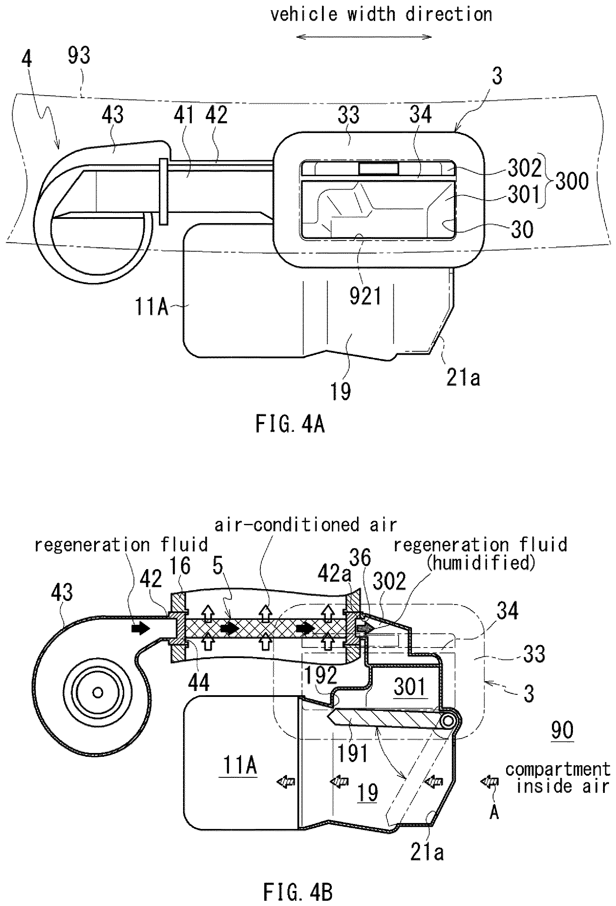

FIG. 4A and FIG. 4B are diagrams explaining the periphery of the inlet part 3 of outside air in the air conditioner 1. FIG. 4A is a front view showing the inlet part 3 and a dehumidification mechanism part 4 as viewed from the accommodating room 91-side of the engine. FIG. 4B is a schematic diagram showing a section A - A in FIG. 3. It should be noted that FIG. 4B shows a flange part 33 of the inlet part 3 in a virtual line for clarifying a positional relation of the inlet part 3 to the flange part 33-side.

As shown in FIG. 1A and FIG. 1B, the vehicular air conditioner 1 is provided with a temperature adjusting part 10 for adjusting air-conditioned air (the air a temperature of which is adjusted) to be supplied to the inside of a vehicle compartment 90.

The temperature adjusting part 10 includes an evaporator 12, a heater core 13, a mix door 14 and a mixing part 15.

The evaporator 12 cools air blown from a sirocco fan 11A. The heater core 13 warms the air inflowing from the evaporator 12-side. The mix door 14 adjusts an inflow amount of the air cooled in the evaporator 12 to the heater core 13-side.

In the air conditioner 1, the air cooled by the evaporator 12 and the air warmed via the heater core 13 are mixed in a mixing part 15 to adjust the air-conditioned air to a specified temperature. The adjustment of the temperature in the air-conditioned air is performed by adjusting an amount of the air flowing to the heater core 13-side by the mix door 14.

Supply ports (a defroster-side supply port 16a, a vent-side supply port 17a, and a foot-side supply port 18a) to ducts (the defroster duct 16, a vent duct 17 and a foot duct 18) are opened to the mixing part 15.

In the air conditioner 1, the air-conditioned air adjusted in the mixing part 15 (the air the temperature of which is adjusted) is finally supplied to the inside of the vehicle compartment 90 through at least one duct of the ducts (the defroster duct 16, vent duct 17 and foot duct 18).

The defroster duct 16 connects the blow port 161 to open near a lower part of a windshield W to the defroster-side supply port 16a.

As shown in FIG. 2, the blow port 161 has a specified length in the vehicle width direction in such a manner that the air-conditioned air blown out from the blow port 161 hits against a substantially entire surface of the windshield W in the vehicle width direction.

Therefore the defroster duct 16 connected to the blow port 161 has a tapered side shape in which as closer to the blow port 161, the length of the defroster duct 16 in the vehicle width direction is the longer.

The air conditioner 1 is configured such that the air to be sent out to the temperature adjusting part 10 from the sirocco fan 11A is switched between air outside of the vehicle compartment 90 (compartment outside air: outside air) and air inside of the vehicle compartment 90 (compartment inside air: inside air).

As shown in Fig. 4 (B), an inflow room 19 of air neighbored to the sirocco fan 11A is provided with a switching valve 191 that switches a communication destination of the inflow room 19 between the inlet part 3 (space 301) of the air outside of the vehicle compartment 90 and the air inside of the vehicle compartment 90.

A communicating port 192 to the inlet part 3 (space 301) and an inlet port 21a of the air within the vehicle compartment 90 open to the inflow room 19.

When the sirocco fan 11A is driven in a state where the switching valve 191 is disposed in a position of closing the communicating port 192 (an inside-air introducing position: refer to a solid line in FIG. 4B), the air within the vehicle compartment 90 flows into the inflow room 19 through the inlet port 21a (refer to an arrow A in FIG. 4B). The air within the vehicle compartment 90 flowing into the inflow room 19 is sent out through the sirocco fan 11A to the temperature adjusting part 10-side.

In addition, when the sirocco fan 11A is driven in a state where the switching valve 191 is disposed in a position of sealing the inlet port 21a (an outside-air introducing position: refer to a virtual line in FIG. 4B), the air outside of the vehicle compartment 90 (compartment outside air) flows into the inflow room 19 through the space 301 of the inlet part 3. The compartment outside air flowing into the inflow room 19 is sent out through the sirocco fan 11A to the temperature adjusting part 10-side.

As shown in FIG. 3, the inlet part 3 of the compartment outside air is formed in a bottomed tubular shape having an opening 30 in a sectional view. The inlet part 3 is provided to direct the opening 30 to a fire wall 92-side that sections the vehicle compartment 90 and the accommodating room 91 of the engine.

The inlet part 3 includes a peripheral wall part 31 surrounding the opening 30, and a bottom wall part 32 sealing an end part at the opposite side to the opening 30 of the peripheral wall part 31.

A flange part 33 surrounding the opening 30 over an entire periphery thereof is provided in an end part of the opening 30-side of the peripheral wall part 31.

The flange part 33 is formed to have a substantially same thickness Wa over an entire periphery thereof. An opposing surface 33a of the flange part 33 to the fire wall 92 corresponds to a mounting surface to the fire wall 92.

The fire wall 92 is provided with a communicating hole 921 penetrating through the fire wall 92 in a thickness direction. The communicating hole 921 establishes communication between a space in the vehicle compartment 90-side and a space of the accommodating room 91-side of the engine.

The communicating hole 921 is formed in an opening shape aligning substantially with the opening 30 of the inlet part 3 as viewed from the accommodating room 91-side of the engine.

As shown in FIG.4A and in FIG.2, the opening 30 of the inlet part 3 is formed in a substantially rectangular shape as viewed from the accommodating room 91-side of the engine. The air conditioner 1 is mounted on the vehicle V in a direction where a long side of the opening 30 is along the vehicle width direction (in a left-right direction in FIG.4 A) .

As shown in FIG. 3, as a sectional view the inlet part 3 has an internal space 300 swollen in a direction of being away from the fire wall 92.

The internal space 300 is provided with a partition wall 34 that partitions the internal space 300 upward/downward. The internal space 300 of the inlet part 3 is partitioned to two spaces 301, 302 neighbored to each other upward/downward by the partition wall 34.

One end 34a of the partition wall 34 in the opening 30-side projects closer to the accommodating room 91-side of the engine than the flange part 33 surrounding the opening 30. The one end 34a of the partition wall 34 is positioned within the communicating hole 921 of the fire wall 92.

The other end 34b of the partition wall 34 is connected to the bottom wall part 32 of the inlet part 3 over an entire length thereof in the vehicle width length.

Here, the partition wall 34 is formed by a material heat exchangeable between the space 301 and the space 302, for example, preferably metal.

As shown in FIG. 3, as a cross-sectional view the partition wall 34 is inclined in a direction (in a lower side in the figure) of being closer to the inflow room 19 from the halfway position in a longitudinal direction toward the other end 34b-side.

The space 301 positioned in the inflow room 19-side as viewed from the partition wall 34 is made smaller in volume (flow passage sectional area) toward the bottom wall part 32-side.

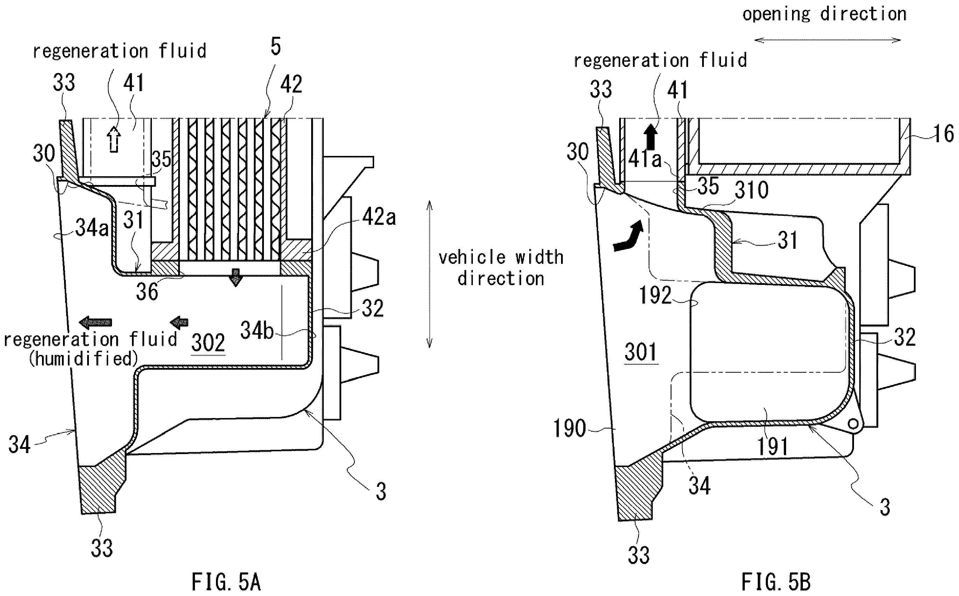

FIG. 5A and FIG. 5B are diagrams explaining the periphery of the inlet part 3 in the air conditioner 1.

FIG. 5A is a schematic diagram showing a section B - B in FIG. 3, and a diagram explaining the space 302-side into which regeneration fluid passing through the desiccant material 5 flows.

FIG. 5B is a schematic diagram showing a section C - C in FIG. 2, and a diagram explaining the space 301-side into which air (regeneration fluid) outside of the vehicle flows.

As shown in FIG. 5B, a communicating port 192 connected to the aforementioned inflow room 19 opens in the depth side (in the right side in FIG. 5B) of the space 301.

An inlet port 35 connected to the after-described dehumidification mechanism part 4 opens in the opening 30-side (in the left side in FIG. 5B) of the space 301.

In the present example, the communicating port 192 opens in a boundary wall 190 (refer to FIG. 3) between the space 301 and the inflow room 19. The inlet port 35 opens to a side wall 310 (refer to FIG. 5B) perpendicular to the boundary wall 190 in the peripheral wall part 31.

Therefore the communicating port 192 and the inlet port 35 each are provided in a direction where opening directions thereof are perpendicular to each other.

The communicating port 192 is positioned downstream of the inlet port 35 in a forward direction (in the right direction in FIG. 5B) of the air (regeneration fluid) outside of the vehicle inflowing from the opening 30 of the inlet part 3.

The inlet port 35 and the communicating port 192 are provided to be offset in the opening direction (in the left-right direction in FIG. 5B) of the opening 30 of the inlet part 3.

Therefore, in the inlet part 3 the air flowing into the space 301 flows into the inlet port 35 in a case where the communicating port 192 is closed by the switching valve 191 (refer to FIG. 3) as mentioned before. In a case where the communicating port 192 is not closed by the switching valve 191, the air flowing into the space 301 predominantly flows into the communicating port 192.

Meanwhile, the space 302 positioned at the opposite to the space 301 across the partition wall 34 (in the upper side in FIG. 3) is, as shown in FIG. 3, formed such that a depth side (in the right side in FIG. 3) volume (flow passage sectional area) thereof is larger than that closer to the opening 30-side.

An inflow port 36 is provided to open in the depth side area of the space 302 a volume of which is larger. The regeneration fluid passing through the after-described desiccant material 5 is configured to flow into the space 302 through the inflow port 36.

A throttle part 37 is provided in the space 302 in the halfway from the inflow port 36 to the opening 30, having a flow passage sectional area that is the narrowest of the space 302.

In the space 302, the flow passage sectional area closer to the depth side than the throttle part 37 is the narrower as closer to the throttle part 37. In addition, the flow passage sectional area closer to the opening 30-side than the throttle part 37 is the slightly wider as closer to the opening 30.

Therefore, since the throttle part 37 functions as an orifice, the regeneration fluid flowing into the space 302 from the inflow port 36 is made faster in flow speed at the time of passing through the throttle part 37, and after that, is discharged from the opening 30.

Here, the one end 34a of the partition wall 34 forming the space 302 is positioned within the communicating hole 921 of the fire wall 92 (refer to FIG. 3). In this state, a discharge port 39 of the regeneration fluid discharged from the space 302 through the opening 30 is formed between the one end 34a of the partition wall 34 and an inner periphery of communicating hole 921.

In the present example, the regeneration fluid made faster in flow speed by the throttle part 37 is discharged in a direction perpendicular to an opening surface of the opening 30 from the discharge port 39 to open closer to the accommodating room 91-side of the engine than the inlet port 35 of the air-conditioned air.

The regeneration fluid discharged from the discharge port 39 is discharged to the accommodating room 91-side of the engine through the communicating hole 921 of the fire wall 92.

As shown in FIG. 3, a cowl box 93 is attached on a surface of the fire wall 92 in the accommodating room 91-side of the engine. The cowl box 93 is provided to cover the communicating hole 921 as viewed from the accommodating room 91-side of the engine.

The cowl box 93 is provided in a range from an upper end 92a-side of the fire wall 92 to the communicating hole 921.

As shown in a virtual line in FIG. 4A, the cowl box 93 is provided over a substantially entire length in the vehicle width direction as viewed from the accommodating room 91-side of the engine.

As shown in FIG. 3, an upper edge 93a of the cowl box 93 is provided to extend to a bottom wall 941 of a wiper installation part 94. The bottom wall 941 of the wiper installation part 94 is provided to seal an upper part opening of a space S1 surrounded by the fire wall 92 and cowl box 93.

The bottom wall 941 is provided to form a clearance Sx to a hood 95. The hood 95 is provided to cover an upper surface of the accommodating room 91 of the engine. A plurality of communicating holes 942 are formed in the bottom wall 941. The space S1 between the cowl box 93 and the fire wall 92 is communicated with a space outside of the vehicle through the plurality of communicating holes 942.

In a state where the inlet port 21a (refer to FIG. 4B) of the air conditioner 1 is sealed with the switching valve 191, when the sirocco fan 11A (refer to FIG. 1A and FIG. 1B) is driven, a negative pressure is generated in the space S1.

When the negative pressure is generated in the space S1, the air within the accommodating room 91 of the engine flows into the space S1 through a clearance Sx between the hood 95 and the bottom wall 941, and the communicating holes 942 of the bottom wall 941.

At this time, the air outside of the vehicle near the upper surface of the hood 95 also flows into the space S1 through the communicating holes 942 of the bottom wall 941.

Here, the air flowing into the space S1 from the inside of the accommodating room 91 of the engine is heated with heat of the engine (drive source PS), which is high in temperature and low in humidity (absolute humidity).

The air flowing into the space S1 from the vicinity to the upper surface of the hood 95 is low in humidity in the winter season, for example.

Therefore, in the present example at least the air low in humidity is used as the regeneration fluid for desorbing water components from the desiccant material 5.

In the vehicular air conditioner 1, a part of the air taken in the inlet part 3 from the space S1 is taken in the dehumidification mechanism part 4 (refer to FIG. 2) attached to the air conditioner 1, thereby performing desorption of water components from the desiccant material 5 installed in the dehumidification mechanism part 4.

Hereinafter, an explanation will be made of the dehumidification mechanism part 4 attached to the air conditioner 1.

As shown in FIG. 2, the dehumidification mechanism part 4 is provided in the air conditioner 1 using the inlet part 3 of the compartment outside air to perform dehumidification of the air-conditioned air.

The dehumidification mechanism part 4 is provided to dehumidify the air-conditioned air to be supplied into the vehicle compartment 90 through the defroster duct 16 (refer to FIG. 3) .

As shown in FIG. 2 and FIG. 5A and FIG. 5B, the dehumidification mechanism part 4 includes an inlet tube 41 communicated with the space 301 of the above-mentioned inlet part 3, and a duct 42 communicated with the space 302.

The inlet tube 41 and the duct 42 are provided substantially in parallel to each other along the vehicle width direction.

One end 41a of the inlet tube 41 is connected to the inlet port 35 opening to the space 301 of the inlet part 3 (refer to FIG. 5B). One end 42a of the duct 42 is connected to the inflow port 36 opening to the space 302 (refer to FIG. 5A).

In the internal space 300 of the inlet part 3, the inlet port 35 is positioned closer to the opening 30-side than the inflow port 36 (refer to FIG. 3).

As shown in FIG. 2, the other end 41b of the inlet tube 41 and the other end 42b of the duct 42 are each connected to the sirocco fan 43.

The sirocco fan 43 is provided between the inlet tube 41 and the duct 42, and when the sirocco fan 43 is driven, the air taken in through the inlet tube 41 is sent out to the duct 42.

In the present example, the air (outside air: regeneration fluid) is suctioned from the space 301 of the inlet part 3 through the inlet tube 41. The suctioned air (outside air: regeneration fluid) is discharged to the space 302 of the inlet part 3 through the duct 42.

As shown in FIG. 2 and FIG. 4B, an intersection area 44 with the defroster duct 16 is provided in the duct 42 in the halfway in the longitudinal direction. The duct 42 is perpendicular to the defroster duct 16 in the intersection area 44.

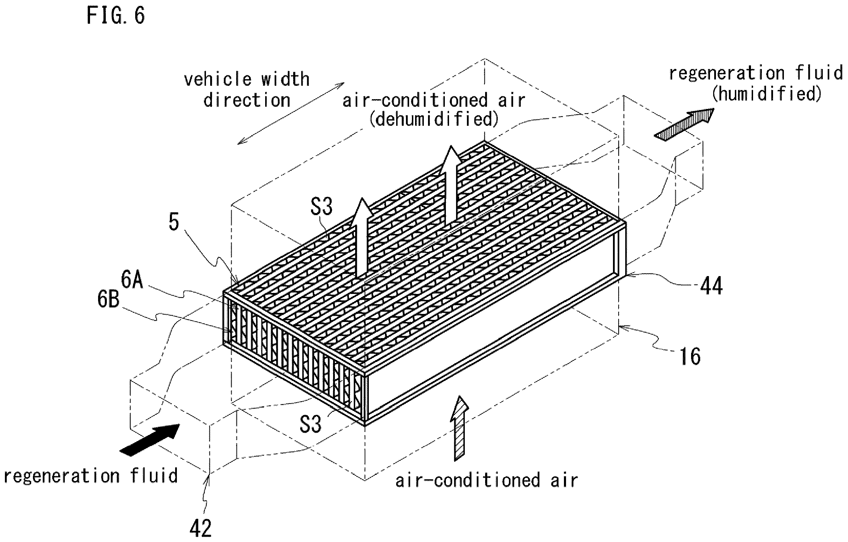

The intersection area 44 is formed in a substantially rectangular shape in a plan view (refer to FIG. 6). The desiccant material 5 is provided in the inside of the intersection area 44. The desiccant material 5 is provided for dehumidification of air (air-conditioned air) flowing in the defroster duct 16.

FIG. 6 is a diagram explaining a location of the desiccant material 5 in the intersection area 44 of the duct 42. In FIG. 6, the duct 42 and the defroster duct 16 are shown in a virtual line for clarifying a positional relation between the desiccant material 5, and the duct 42 and the defroster duct 16.

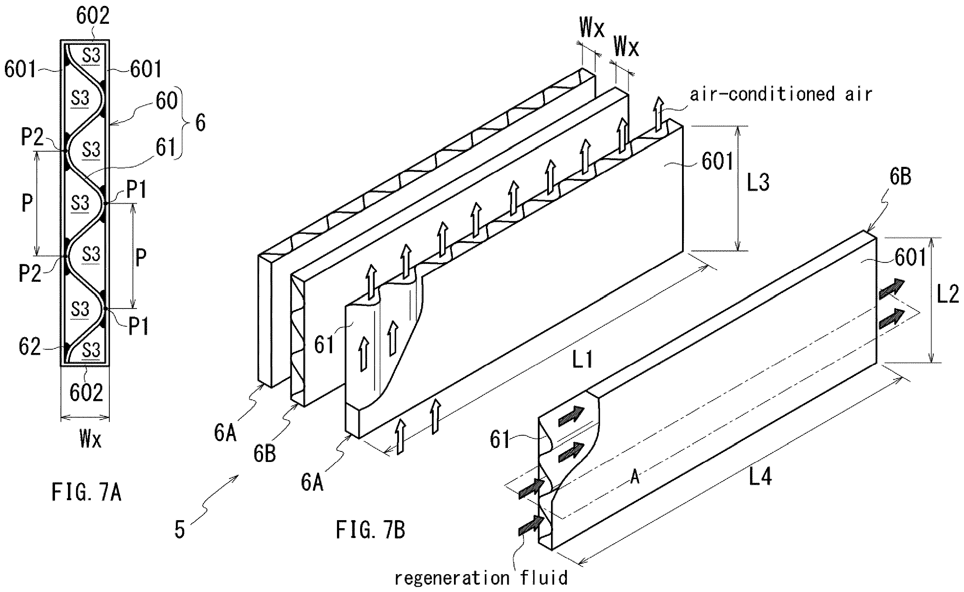

FIG. 7A and FIG. 7B are diagrams explaining the configuration of the desiccant material 5. FIG. 7A is a diagram explaining a basic configuration of a tubular base member 6 configuring a desiccant material. FIG. 7 (B) is a diagram explaining an arrangement of tubular base members 6A, 6B. It should be noted that the tubular base members 6A, 6B lining up in the desiccant material 5 are shown to be separated from each other, and are shown to be partly cut away in FIG. 7B.

As shown in FIG. 6, a moving direction of the air-conditioned air is perpendicular to that of the regeneration fluid in the intersection area 44 of the defroster duct 16 and the duct 42.

The desiccant material 5 is configured with the tubular base members 6A through which the air-conditioned air passes and the tubular base members 6B through which the regeneration fluid air passes, which line up in a width direction of the duct 42.

Here, the tubular base member 6A and the tubular base member 6B each are formed of the same basic configuration, and therefore in the explanation to be made hereinafter, will be described as the tubular base member 6 for descriptive purposes in a case of particularly not distinguishing the tubular base member 6A and the tubular base member 6B.

As shown in FIG. 7A, the tubular base member 6 includes a tubular base member 60 and a wavelike base member 61.

The tubular base member 60 is an annular member formed in a rectangular shape in a cross-sectional view. The wavelike base member 61 is located between side parts 601, 601 in the long sides of the tubular base member 60 in parallel to each other.

As viewed in the passing direction of the air-conditioned air (regeneration fluid), the tubular base member 60 includes the side parts 601, 601 arranged in parallel to each other having a clearance Wx therebetween, and side parts 602, 602 in the short side connecting end parts each other of the side parts 601, 601.

As viewed in the passing direction of the air-conditioned air (regeneration fluid), the wavelike base member 61 is provided to make alternate contact with the one end part 601 and the other end part 601 of the tubular base member 60.

Contact points P1, P2 of the wavelike base member 61 and the side part 601 are connected by an adhesive member 62.

A clearance P between the contact points P1, P1 of the wavelike base member 61 and the one side part 601 and a clearance P between the contact points P2, P2 of the wavelike base member 61 and the other side part 601 each have the substantially same pitch.

In the tubular base member 6, a plurality of spaces S3 surrounded by the tubular base member 60 and the wavelike base member 61 are formed inside of the tubular base member 60, each having the substantially same opening cross-sectional area.

In the present example, each of the plurality of spaces S3 becomes a flow passage through which the air-conditioned air and the regeneration fluid pass (hereinafter, this space S3 will be described as a flow passage S3 as well).

The desiccant material 5 is configured with the tubular base members 6A, 6B alternately lining up. The neighbored tubular base members 6A, 6B are provided such that the side parts 601, 601 in the long side of each other make contact with each other over an entire surface.

In the desiccant material 5, the tubular base member 6A is located to direct an opening of the flow passage S3 to be along the moving direction of the air-conditioned air. In addition, the tubular base member 6B is located to direct an opening of the flow passage S3 to be along the moving direction of the regeneration fluid.

In the desiccant material 5 as shown in FIG. 6, the tubular base members 6A and the tubular base members 6B are alternately arranged in a laminating direction. The flow passage S3 of the tubular base member 6A is perpendicular to the flow passage S3 of the tubular base member 6B.

In the tubular base members 6A and the tubular base members 6B configuring the desiccant material 5, a length of the side part 601 in the long side of the tubular base member 60 differs from each other as shown in FIGs.7A and 7B.

That is, a length L1 of the side part 601 in the long side of the tubular base member 6A is longer than a length L2 of the side part 601 in the long side of the tubular base member 6B.

In the tubular base member 6A and the tubular base member 6B, a length L3 of the tubular base member 6A in a flowing direction of the air-conditioned air is shorter than a length L4 of the tubular base member 6B in a flowing direction of the regeneration fluid.

In the present example, the length L1 of the side part 601 in the long side of the tubular base member 6A and the length L4 of the tubular base member 6B in the flowing direction of the regeneration fluid are set to the same length (L1 = L4). Further, the length L2 of the side part in the long side of the tubular base member 6B and the length L3 of the tubular base member 6A in the flowing direction of the air-conditioned air are set to the same length (L2 = L3).

Therefore, when the tubular base members 6A, 6B line up alternately, the desiccant material 5 in a cuboid shape is formed.

In the present example, the tubular base member 6 (the tubular base member 60 and the wavelike base member 61) configuring the desiccant material 5 is configured with paper or non-woven cloth allowing adsorption and desorption of water components.

Here, expecting an improvement on an efficiency of the adsorption and desorption, it is preferable to cause a material allowing adsorption and desorption of water components such as a polymeric adsorbing material or an inorganic adsorbing material, to be supported on the tubular base member 60 and the wavelike base member 61.

In addition, instead of the non-woven cloth or paper, for example, the polymeric adsorbing materials are caused to bind to be formed in a plate shape or wave shape, and thereby the tubular base member 60 and the wavelike base member 61 themselves may be configured with the polymeric adsorbing materials.

Here, the term "adsorbing material" in the present specification is an organic polymeric material or an inorganic material having a characteristic of retaining (adsorbing) water components, and means both of not only a material (general adsorbing material) causing water components to be adsorbed on a surface of this material but also a material accommodating water components in the inside of the material.

In addition, the water components are retained in the adsorbing material in a state where the movement in the adsorbing material retained in the base material and the movement between the adsorbing material and the base material are made possible.

In the present example, widths Wx, Wx (refer to FIG. 7B) of the tubular base member 6A and the tubular base member 6B configuring the desiccant material 5 in the laminating direction are set to the same width.

It should be noted that the width Wx of the tubular base member 6B for passage of the regeneration fluid may be made larger than the width Wx of the tubular base member 6A for passage of the air-conditioned air.

In this case, a flow amount of the regeneration fluid is increased, thus making it possible to further reduce the adsorbing amount of the water components in the tubular base member 6B of the desiccant material 5. As a result, it is possible to move the water components adsorbed in the tubular base member 6A-side to the tubular base member 6B-side more quickly.

In a case of further reducing the adsorbing amount of the water components in the tubular base member 6B of the desiccant material 5, the width Wx of the tubular base member 6B is not changed but a rate in the use number between the tubular base member 6A and the tubular base member 6B may be changed.

For example, by setting the number of the tubular base members 6B in the desiccant material 5 more than that of the tubular base member 6A, it is possible to further reduce the adsorbing amount of the water components in the desiccant material 5.

For adjusting the adsorbing amount of the water components in the desiccant material 5, it is more preferable to change a rate of or the widths Wx, Wx of the tubular base member 6A and the tubular base member 6B in the laminating direction than to change the width of the defroster duct 16 or the duct 42 in the intersection area 44.

This is because changing the rate of or the widths Wx, Wx of the tubular base member 6A and the tubular base member 6B in the laminating direction can lead to easier adjustment of the adsorbing amount of the water components in the tubular base member 6B of the desiccant material 5.

Hereinafter, an explanation will be made of an operation of the desiccant material 5 provided in the air conditioner 1 with this configuration.

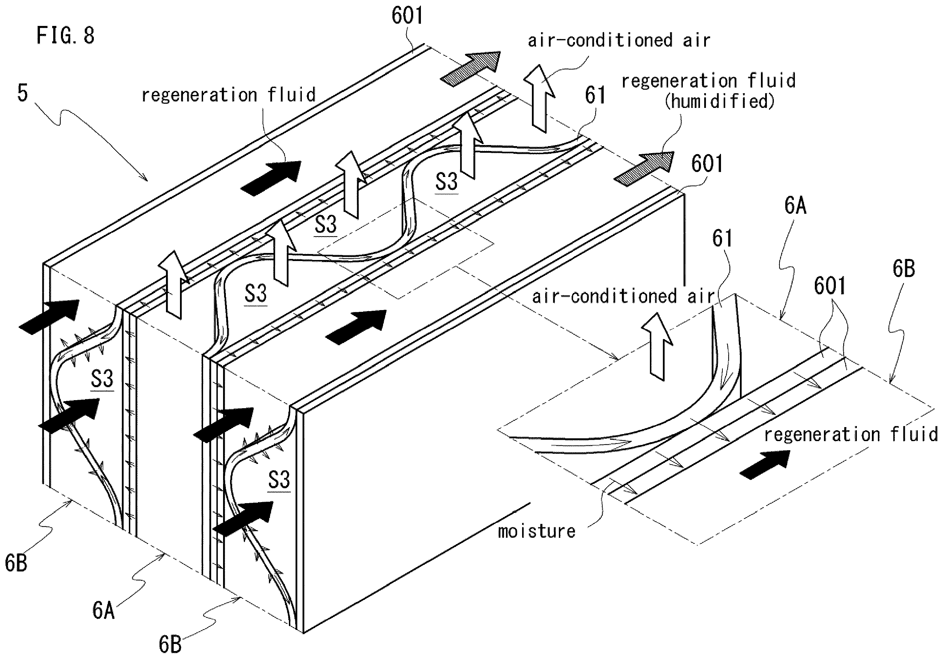

FIG. 8 is a diagram explaining the movement of water components in the desiccant material 5.

In the vehicle V (refer to FIG. 1A and FIG. 1B), the air conditioner 1 circulates the air (inside air) taken in from the inside of the vehicle compartment 90 to the inside of the vehicle compartment 90 after the temperature adjustment in a case of air-conditioning the inside of the vehicle compartment 90 without taking in outside air.

Therefore the air (air-conditioned air) to be circulated increases in humidity with time depending upon a situation within the vehicle compartment 90 or the like.

Here, when the air-conditioned air having high humidity is blown on the windshield W, the windshield W possibly mists up.

Therefore the air conditioner 1 according to the present example causes the desiccant material 5 provided in the halfway of the defroster duct 16 to adsorb water components contained in the air-conditioned air to dehumidify the air-conditioned air to be blown on the windshield W.

Here, the desiccant material 5 is located in the intersection area 44 between the defroster duct 16 and the duct 42. The desiccant material 5 is provided to bridge over between the defroster duct 16 for passage of the air-conditioned air and the duct 42 for passage of the regeneration fluid.

In the tubular base member 6A configuring the desiccant material 5, the air-conditioned air passes the inside of the flow passage S3 surrounded by the tubular base member 60 and the wavelike base member 61.

Therefore when the air-conditioned air passes the tubular base member 6A, the water components contained in the air-conditioned air are adsorbed by the tubular base member 60 and the wavelike base member 61 surrounding the flow passage S3 to perform dehumidification of the air-conditioned air (refer to FIG. 8).

Meanwhile, in the tubular base member 6B configuring the desiccant material 5, the regeneration fluid passes the inside of the flow passage S3 surrounded by the tubular base member 60 and the wavelike base member 61.

Here, the regeneration fluid is at least air low in humidity. Therefore, when the regeneration fluid passes the tubular base member 6B, the water components adsorbed in the tubular base member 60 and the wavelike base member 61 surrounding the flow passage S3 are desorbed from the tubular base member 60 and the wavelike base member 61 to be taken in the regeneration fluid. Therefore the regeneration fluid is humidified.

In the desiccant material 5, the adsorbing amount of the water components in the tubular base member 6A is larger than that of the tubular base member 6B. Then, as a result of effecting a function of uniformizing a distribution of water components in the entire desiccant material 5, the water components move from the tubular base member 6A toward the tubular base member 6B neighbored to the tubular base member 6A.

As shown in FIG. 8, in the desiccant material 5, the tubular base member 6A for passage of the air-conditioned air and the tubular base member 6B for passage of the regeneration fluid are provided to cause the respective side parts 601, 601 to be in contact with each other. Therefore the water components adsorbed in the side part 601 of the tubular base member 6A quickly move to the side part 601 of the tubular base member 6B in contact with the side part 601 of the tubular base member 6A (refer to the enlarged diagram of FIG. 8).

The wavelike base member 61 is positioned inside of the tubular base member 60 in the tubular base member 6A, and the wavelike base member 61 makes alternate contact with the side part 601 of the tubular base member 60. Therefore the water components adsorbed in the wavelike base member 61 moves to the side part 601 of the tubular base member 60, and thereafter, moves to a side of the tubular base member 6B for passage of the regeneration fluid (refer to the enlarged diagram in FIG. 8).

Accordingly, as a result of increasing a contact area with the air-conditioned air by locating the wavelike base member 61 in the inside of the tubular base member 60, the water components contained in the air-conditioned air can be more securely adsorbed to dehumidify the air-conditioned air.

In this way, in a state where the regeneration fluid and the air-conditioned air successively flow, (1) the water components that are removed from the air-conditioned air and are desorbed in the tubular base member 6A move to the tubular base member 6B-side in which the adsorbing amount of the water components is a little. In addition, (2) since the water components having moved to the tubular base member 6B are taken in the regeneration fluid passing the tubular base member 6B, the adsorbing amount of the water components in the tubular base member 6B is always kept in the amount less than the adsorbing amount of the water components in the tubular base member 6A.

As a result, since the water components adsorbed in the tubular base member 6A of the desiccant material 5 regularly move to the tubular base member 6B-side, the adsorbing amount of the water components in the tubular base member 6A is not saturated.

Therefore, there does not occur the necessity of executing the regeneration treatment of the desiccant material 5 caused by the saturation of the water component adsorbing amount in the desiccant material as in a case of the conventional desiccant material. Thereby successive dehumidification of the air-conditioned air is made possible only by successive flow of the regeneration fluid.

In this way, since the desiccant material can be all the time used and further, it is not necessary to provide a mechanism of switching the flow passage of the air-conditioned air or the regeneration fluid, a desiccant system of a simple configuration is realized.

As described before, in the duct 42 in which the desiccant material 5 is provided in the intersection area 44, the one end 42a in the downstream side of the intersection area 44 is communicated with the space 302 of the inlet part 3 (refer to FIG. 4B and FIG. 5A).

Therefore the regeneration fluid having taken in the water components at the time of passing the desiccant material 5 flows into the space 302 from the inflow part 36 of the inlet part 3 (refer to FIG. 3). The regeneration fluid having flowed into the space 302 is discharged from the discharge port 39 formed by sectioning the inside of the opening 30.

Here, the internal space 300 of the inlet part 3 is sectioned into the space 302 communicated with the duct 42 and the space 301 communicated with the inlet tube 41 by the partition wall 34 provided in the inlet part 3.

Therefore the regeneration fluid having flowed into the space 302 from the inflow port 36 is not taken in the inlet tube 41 before being discharged from the discharge port 39.

Thereby the regeneration fluid having taken in the water components are not supplied to the desiccant material 5.

One end 34a of the partition wall 34 in the opening 30-side projects closer to the fire wall 92-side than the flange part 33 surrounding the opening 30, and the one end 34a of the partition wall 34 is positioned within the communicating hole 921 of the fire wall 92 (refer to FIG. 3).

In addition, the throttle part 37 is provided within the space 302, and the regeneration fluid to be discharged from the opening 30 after passing the throttle part 37 is discharged into the space S1 through the discharge port 39 formed between an inner periphery of the opening 30 and the partition wall 34 and the communicating hole 921 in a fast speed with directionality.

Therefore a mixing degree of the air (regeneration fluid) suctioned to the space 301-side of the inlet part 3 from the space S1 and the regeneration fluid containing the water components discharged from the discharge port 39 through the space 302 is made low.

Thereby the regeneration fluid containing many water components is supplied to the desiccant material 5 to make it difficult for a desorption efficiency of water components from the desiccant material 5 to be lowered.

As described above, the vehicular air conditioner 1 according to the present example has the configuration as follows.
(1) The vehicular air conditioner 1 comprises:
   the desiccant material 5 that enables adsorption of water components contained in air of a dehumidification target and release of the adsorbed water components to regeneration fluid (collection air; outside air),
   the defroster duct 16 (first flow passage) in which the air of the dehumidification target flows; and
   the duct 42 (second flow passage) in which the regeneration fluid flows.

The desiccant material 5 is provided to bridge between the defroster duct 16 and the duct 42.

The water components contained in the air of the dehumidification target are caused to be adsorbed to the desiccant material 5 to dehumidify the air of the dehumidification target.

The air of the dehumidification target is air for air-conditioning to be supplied into the vehicle compartment 90, and is air-conditioned air a temperature of which is adjusted in the temperature adjusting part 10.

The inlet port 35 of the regeneration fluid to be supplied to the duct 42 and the discharge port 39 of the regeneration fluid to be discharged from the duct 42 are provided using the communicating hole 921 as the existing opening part in the fire wall 92 (sectioning wall) for sectioning the accommodating room 91 of the engine (drive source) and the vehicle compartment 90.

With this configuration, it is not necessary to separately provide the opening parts as the inlet port or the outlet port of the regeneration fluid in the fire wall 92 sectioning the accommodating room 91 of the engine and the vehicle compartment 90. In a case of providing a new opening part in the fire wall 92, since there is a limit to a position of being capable of providing the opening part, the freedom degree of the installation of the air conditioner 1 (mounting performance) is limited. In contrast to this, the freedom degree of the installation of the air conditioner 1 (mounting performance) improves by using the communicating hole 921 as the existing opening part.

The vehicular air conditioner 1 has the configuration as follows.

(2) The duct 42 is provided to intersect with the defroster duct 16.

The desiccant material 5 is provided in the intersection area 44 with the defroster duct 16 in the duct 42.

With this configuration, by providing the duct 42 of the regeneration fluid added to the air conditioner 1 to intersect with the existing defroster duct 16, the desiccant material 5 can be provided to bridge over between the duct 42 and the defroster duct 16.

Here, for providing the desiccant material 5 to bridge over between the duct 42 and the defroster duct 16, it is thought to prepare for a contact part in which wall parts of the duct 42 and the defroster duct 16 come in contact with each other and to provide the desiccant material in this contact part.

In this case, however, it is necessary to lengthen an entire length of the duct 42 and the defroster duct 16 for providing a contact part, leading to the large-sizing of the air conditioner 1.

Then, since a space around the fire wall 92 is limited, the freedom degree of the installation of the air conditioner 1 (mounting performance) is further limited.

By providing the desiccant material 5 in the intersection area 44 with the defroster duct 16 in the duct 42, the large-sizing of the air conditioner 1 can be suppressed and the air-conditioned air can be dehumidified.

The vehicular air conditioner 1 has the configuration as follows. (3) The communicating hole 921 as the existing opening part is an opening part used as the inlet port (outside air inlet port) of air outside of the vehicle compartment 90 in the air conditioner 1.

With this configuration, since the outside air inlet port in the air conditioner 1 is formed to have a sufficient opening diameter, it is possible to take in the regeneration fluid to the duct 42-side using the outside air inlet port without affecting the inlet amount of the outside air into the air conditioner 1.

In addition, the dehumidification of the air-conditioned air (air of the dehumidification target) is required primarily at the time of air-conditioning the inside of the vehicle compartment 90 while circulating the air within the vehicle compartment 90. Here, since the taking-in of the outside air into the air conditioner 1 is not performed while circulating the air within the vehicle compartment 90, even if the inlet port 35 and the discharge port 39 of the regeneration fluid are provided to the outside air inlet port of the air conditioner 1 and are commonly used, it does not give any influence on the air-conditioning by the air conditioner 1.

The vehicular air conditioner 1 has the configuration as follows. (4) The air conditioner 1 includes the inlet part 3 (communicating room) communicated with the communicating hole 921 as the existing opening part.

The internal space 300 of the inlet part 3 is provided with the partition wall 34 (sectioning wall) that sections the internal space 300 into the space 301 in the inlet port 35-side of the regeneration fluid and the space 302 in the discharge port 39-side of the regeneration fluid.

The one end 34a of the partition wall 34 projects from the opening 30 of the inlet part 3 to form the discharge port 39 of the regeneration fluid discharged from the space 302 to the inner periphery of the communicating hole 921 of the fire wall 92.

The discharge port 39 opens closer to the accommodating room 91-side of the engine than the inlet port 35 of the regeneration fluid.

The regeneration fluid discharged from the discharge port 39 contains many water components desorbed from the desiccant material 5. Therefore, when the regeneration fluid containing the water components is taken in from the inlet port 35, the regeneration fluid containing many water components is supplied to the desiccant material 5 to block desorption of the water components from the desiccant material 5.

Therefore, with the configuration as described above, the amount of the regeneration fluid that is discharged from the discharge port 39 and thereafter, is taken in the inlet port 35 can be made small.

Thereby it is possible to more appropriately perform the desorption of the water components from the desiccant material 5.

The vehicular air conditioner 1 has the configuration as follows. (5) As viewed from the accommodating room 91-side of the engine, the inlet port 35 and the discharge port 39 each open in a position of being away from each other in the internal space 300 of the inlet part 3.

With the configuration as described above, since the amount of the regeneration fluid that is discharged from the discharge port 39 and thereafter, is taken in the inlet port 35 can be made small, it is possible to more appropriately perform the desorption of the water components from the desiccant material 5.

The vehicular air conditioner 1 has the configuration as follows. (6) The internal space 300 of the inlet part 3 is provided with the partition wall 34 (sectioning wall) that sections the internal space 300 into the space 301 in the inlet port 35-side of the regeneration fluid and the space 302 in the discharge port 39-side of the regeneration fluid.

The one end 34a of the partition wall 34 projects from the opening 30 of the inlet part 3 and is positioned within the communicating hole 921 of the fire wall 92.

With this configuration, the regeneration fluid flowing through the communicating hole 921 into the space 301 to which the inlet port 35 opens and the regeneration fluid containing water components that flows into the space 302 from the inflow port 36 and after that, is discharged from the discharge port 39 can be appropriately prevented from mixing.

Thereby it is possible to appropriately prevent the desorption of the water components from the desiccant material 5 from being blocked due to supply of the regeneration fluid containing the water components to the desiccant material 5.

The vehicular air conditioner 1 has the configuration as follows. (7) The partition wall 34 is formed by a heat -transferable member such as metal.

The regeneration fluid flowing in the space 301 in the inlet port 35-side of the regeneration fluid and the regeneration fluid flowing in the space 302 in the discharge port 39-side of the regeneration fluid are heat-exchangeable through the partition wall 34.

In the desiccant material 5, exchange of not only water components but also heat is performed between the air-conditioned air and the regeneration fluid passing the desiccant material 5. When outside air low in temperature as in the winter season is supplied to the desiccant material as the regeneration fluid, the air-conditioned air for heating is cooled by heat exchange with the regeneration fluid at the time of passing the desiccant material 5.

Here, the regeneration fluid flowing into the space 302 is warmed by heat exchange with the air-conditioned air in the desiccant material 5, and has a temperature higher than the regeneration fluid having flowed into the space 301.

Accordingly, when the regeneration fluid that flows into the space 302 from the inflow port 36 and is then discharged from the discharge port 39 and the regeneration fluid that flows into the space 301 from the opening 30 and is then taken in the inlet port 35 are made heat-exchangeable, it is possible to warm the regeneration fluid having flowed into the space 301.

Thereby the regeneration fluid that is warmed by heat-exchange and is higher in temperature can be supplied to the desiccant material 5 to reduce a temperature difference between the regeneration fluid and the air-conditioned air passing the desiccant material 5.

Accordingly, since it is possible to suppress the extent that the air-conditioned air for heating is cooled by heat exchange in the desiccant material 5 in the winter season, an improvement on a heating efficiency can be expected.

The vehicular air conditioner 1 has the configuration as follows. (8) The inflow port 36 of the regeneration fluid having passed the desiccant material 5 opens to the space 302 in the discharge port 39-side of the regeneration fluid.

In the space 302, the throttle part 37 narrow in flow passage sectional area (opening sectional area) is provided on a route of the regeneration fluid that flows from the inflow port 36 into the space 302 and is then discharged from the discharge port 39.

With this configuration, the throttle part 37 functions as an orifice.

The regeneration fluid having flowed into the space 302 from the inflow port 36 is discharged through the throttle part 37 from the discharge port 39. At this time, the regeneration fluid is discharged into the space S1 from the communicating hole 921 neighbored to the opening 30 in a fast speed with directivity.

Therefore a mixing degree of the air (regeneration fluid) suctioned to the space 301-side of the inlet part 3 from the space S1 and the regeneration fluid that is discharged from the space 302 and contains water components is further lowered. Thereby it is possible to more appropriately prevent the desorption of the water components from the desiccant material 5 from being blocked due to supply of the regeneration fluid containing the water components to the desiccant material 5.

The vehicular air conditioner 1 has the configuration as follows. (9) The communicating port 192 with the inflow room 19 of air neighbored to the sirocco fan 11A in the air conditioner 1 opens to the space 301 in the inlet port 35-side of the regeneration fluid.

The space 301 is communicated with the temperature adjusting part 10 in the air conditioner 1 through the communicating port 192.

The inlet port 35 opens closer to the communicating hole 921-side (opening 30-side) as the existing opening part than the communicating port 192.

With this configuration, even when the communicating port 192 is not fully closed by the switching valve 191 (refer to FIG. 3) as in a case of introducing outside air into the vehicle compartment 90 and supplying air-conditioned air therein, a part of the air having flowed into the space 301 can be caused to flow into the inlet port 35-side.

Therefore even in a case where the air conditioner 1 introduces the outside air and supplies the air-conditioned air into the vehicle compartment 90, it is possible to appropriately perform the dehumidification of the air-conditioned air flowing in the defroster duct 16.

The vehicular air conditioner 1 has the configuration as follows.

(10) The desiccant material 5 includes
the tubular base member 6A (first tubular base member) that is formed in a rectangular shape in a cross-sectional view and a pair of the side parts 601, 601 facing each other with a clearance, and
the tubular base member 6B (second tubular base member) that is formed in a rectangular shape in a cross-sectional view and a pair of the side parts 601, 601 facing each other with a clearance.

The desiccant material 5 is formed such that the tubular base members 6A and the tubular base members 6B line up in a state where the respective side parts 601, 601 come in contact with each other.

In the desiccant material 5 the tubular base member 6A is located in a direction where the opening is provided along the flowing direction of the air-conditioned air.

In the desiccant material 5 the tubular base member 6B is located in a direction where the opening is provided along the flowing direction of the regeneration fluid.

With this configuration, the adsorbing amount of the water components in the tubular base member 6B in which the regeneration fluid flows is made smaller than the adsorbing amount of the water components in the tubular base member 6A in which the air-conditioned air flows.

Thereby the water components of the air-conditioned air adsorbed in the tubular base member 6A move to the tubular base member 6B neighbored to the tubular base member 6A. The water components move to the tubular base member 6B is desorbed from the tubular base member 6B by the regeneration fluid passing in the inside of the tubular base member 6B.

In addition, the water component amount adsorbed in the tubular base member 6B in which the regeneration fluid flows continues to be kept to be the amount smaller than the water component amount adsorbed in the tubular base member 6A in which the air-conditioned air flows.

Then, since the water components adsorbed in the tubular base member 6A regularly move to the tubular base member 6B-side in which the regeneration fluid flows, there is no possibility that the adsorbing amount of water components in the tubular base member 6A in which the air-conditioned air flows reaches an upper limit to make it impossible to perform the dehumidification of the air-conditioned air.

Accordingly, the dehumidification of the air-conditioned air can be successively performed.

The vehicular air conditioner 1 has the configuration as follows. (11) The wavelike base member 61 formed in a waveform as viewed in the flowing direction of the air-conditioned air (regeneration fluid) is located inside of the tubular base member 6 (6A, 6B) in such a manner as to make alternate contact with a pair of the one side part 601 and the other side part 601 facing each other with the clearance.

With this configuration, since the wavelike base member 61 functions as a rib increasing strength of the tubular base member 6, the strength of the desiccant material 5 configured by lining up the tubular base members 6 improves.

In addition, since the wavelike base member 61 increases a contact area (opportunity) between the air-conditioned air and the regeneration fluid, the adsorption of the water components from the air-conditioned air and the release of the adsorbed water components can be performed more efficiently.

Further, since the wavelike base member 61 makes alternate contact with the one side part 601 and the other side part 601, it is possible to quickly move the water components adsorbed in the wavelike base member 61 to the tubular base member 60-side. As a result, it is possible to quickly move the water components adsorbed in the tubular base member 6 that the air-conditioned air passes to the tubular base member 60-side that the regeneration fluid passes.

It should be noted that the above-mentioned example shows as an example a case where the desiccant material 5 is located in the intersection area 44 where the defroster duct 16 is perpendicular to the duct 42.

In the intersection area 44 where the desiccant material 5 is located, it is not necessarily required that the defroster duct 16 is perpendicular to the duct 42. For example, the desiccant material may be located in an intersection area where the defroster duct 16 intersects at a specified angle θ with the duct 42.

Further, the above-mentioned example shows as an example a case where the duct 42 and the defroster duct 16 are disposed to intersect with each other and the desiccant material 5 is located in the intersection area 44 with the defroster duct 16 in the duct 42.

The position for providing the desiccant material 5 is not limited to that of the aforementioned example.

For example, by providing a contact area where a wall part of the defroster duct 16 (flow passage) of the air-conditioned air and a wall part of the duct 42 (flow passage) of the regeneration fluid are made to be in contact with each other, the desiccant material 5 may be located in this contact area.

Also in this case, when the desiccant material is located to bridge over between the defroster duct 16 (flow passage) of the air-conditioned air and the duct 42 (flow passage) of the regeneration fluid, the water components contained in the air-conditioned air can be adsorbed in the area positioned within the defroster duct 16 in the desiccant material 5.

In addition, it is possible to cause the regeneration fluid side to take in the water components adsorbed in the desiccant material 5 in the area positioned within the duct 42. Therefore the air-conditioned air supplied into the vehicle compartment through the defroster duct can be appropriately dehumidified.

In the above-mentioned example, the partition wall 34 sectioning the internal space 300 of the inlet part 3 is provided to prevent the regeneration fluid containing the water components discharged from the discharge port 39 and the regeneration fluid that inflows from the opening 30 and flows into the inlet port 35 from mixing.

However, the configuration as follows may be adopted.
(a) The partition wall 34 is abolished.
(b) In a direction perpendicular to an opening surface of the opening 30, the inlet port 35 in the opening 30-side is provided to be away from the inflow port 36 in the bottom wall part 32-side.
(c) The communicating port 192 communicated with the inflow room 19 of air is provided between the inlet port 35 and the inflow port 36.

In a case where the air conditioner 1 introduces the outside air and the inside air and supplies the air-conditioned air within the vehicle compartment 90, the communicating port 192 between the space 302 and the inflow room 19 is not fully closed by the switching valve 191 (refer to FIG. 3).

At the time of this state, there occurs the flow of air from the internal space 300 through communicating port 192 toward the inflow room 19.

Therefore, even when the regeneration fluid having contained many water components through the desiccant material 5 flows into the internal space 300 from the inflow port 36, since the communicating port 192 opens between the inflow port 36 and the inlet port 35, the regeneration fluid is discharged from the communicating port 192 to the inflow room 19-side.

That is, the inflow of the regeneration fluid containing the water components into the inlet port 35 can be blocked and discharged from the communicating port 192.

Therefore, in a case where the air conditioner 1 introduces the outside air and supplies the air-conditioned air into the vehicle compartment 90, it is possible to appropriately perform the dehumidification of the air-conditioned air flowing in the defroster duct 16.

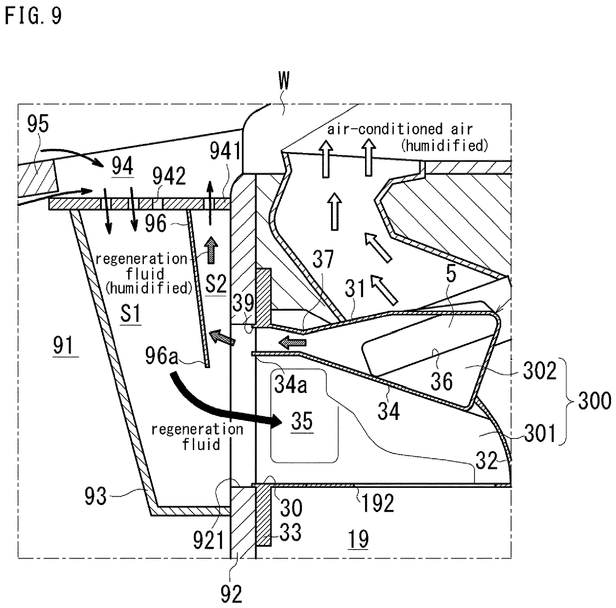

FIG. 9 is a diagram explaining a guide wall 96 of the regeneration fluid located within the cowl box 93.

In the above-mentioned example, for making it difficult to mix the regeneration fluid discharged from the space 302 in the discharge port 39-side and the regeneration fluid flowing into the space 301 in the inlet port 35-side, the configuration as follows is adopted.

That is, there is adopted the configuration that the one end 34a of the partition wall 34 sectioning the internal space 300 is positioned within the communicating hole 921 of the fire wall 92.

For example, by adopting the configuration as shown in FIG. 9, the regeneration fluid discharged from the space 302 and the regeneration fluid flowing into the space 301 may be prevented from mixing.

That is, the guide wall 96 is provided within the cowl box 93 to form the space S2 in which the regeneration fluid discharged from the space 302 flows and the space S1 in which the outside air taken in from the wiper installation part 94-side flows, between the cowl box 93 and the fire wall 92.

In this case, it is preferable to position a lower end 96a of the guide wall 96 closer to a lower side of the inflow room 19-side than on an extension line of the one end 34a of the partition wall 34. With this arrangement, the regeneration fluid discharged from the space 302 in the discharge port 39-side is guided until the communicating hole 942 of the bottom wall 941 without mixing with the regeneration fluid (outside air) flowing into the space S1 and can be discharged outside of the vehicle.

The above-mentioned example shows as an example a case where the opening 30 (the inlet port 35 and the discharge port 39 of the regeneration fluid) of the inlet part 3 is provided using the communicating hole 921 that is the existing opening part of the fire wall 92 (sectioning wall) and is used as an outside air inlet port of the air conditioner 1.

The fire wall 92 is provided with the opening part (communicating hole 921) used as the outside air inlet port of the air conditioner 1 and further, is provided with the other opening parts such as opening parts for insert of a supply tube of a thermal medium to be supplied to a heater core 13 and a supply tube of a cooling medium to be supplied to a cooler core.

Thereby the inlet port 35 and the discharge port 39 of the regeneration fluid may be provided by using these other existing opening parts.

### (Embodiment)

Hereinafter, an explanation will be made of an air conditioner 1A according to the embodiment of the present invention.

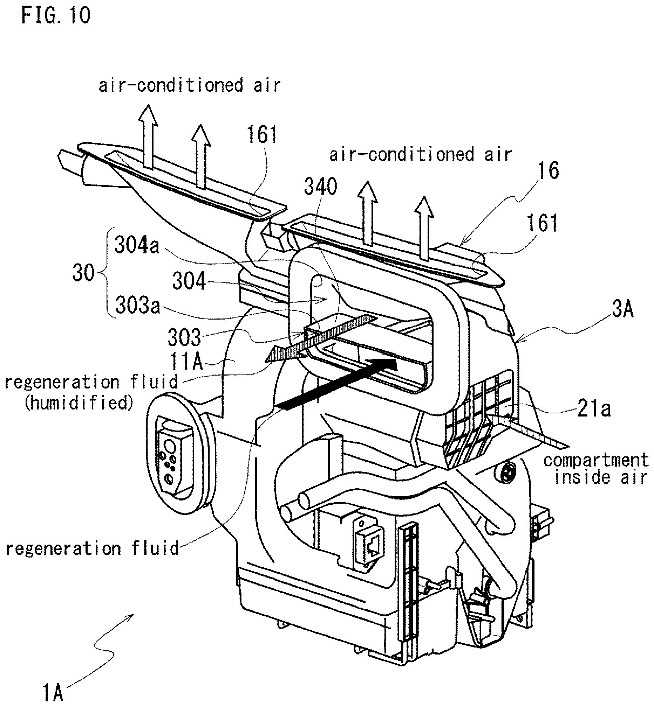

FIG. 10 is a perspective view showing the air conditioner 1A as viewed from an accommodating room 91-side of an engine.

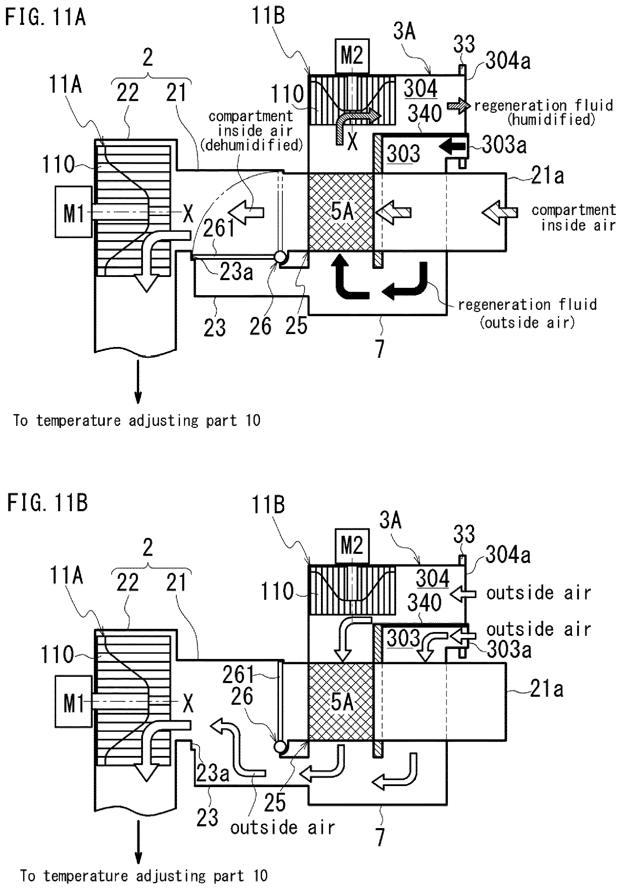

FIG. 11A and FIG. 11B are schematic diagrams showing flow passages of air from an inlet part 3A of outside air and an inlet part 21a of inside air to a sirocco fan 11A in the air conditioner 1A.

FIG. 11A is a diagram showing a state where a partition wall 261 of a switching valve 26 is located in an inside air introducing position. FIG. 11B is a diagram showing a state where the partition wall 261 of the switching valve 26 is located in an outside air introducing position.

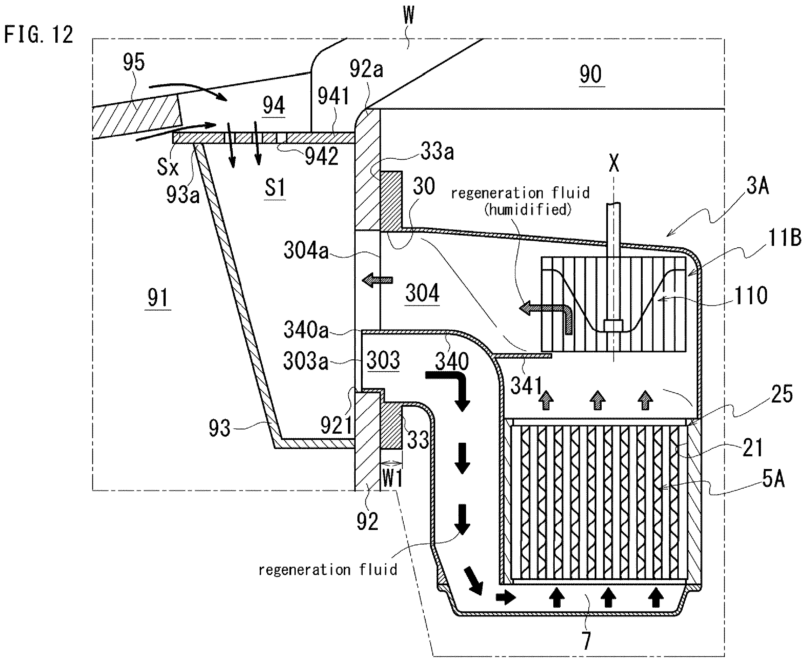

FIG. 12 is an enlarged cross section showing the periphery of the inlet part 3A of outside air in the air conditioner 1A.

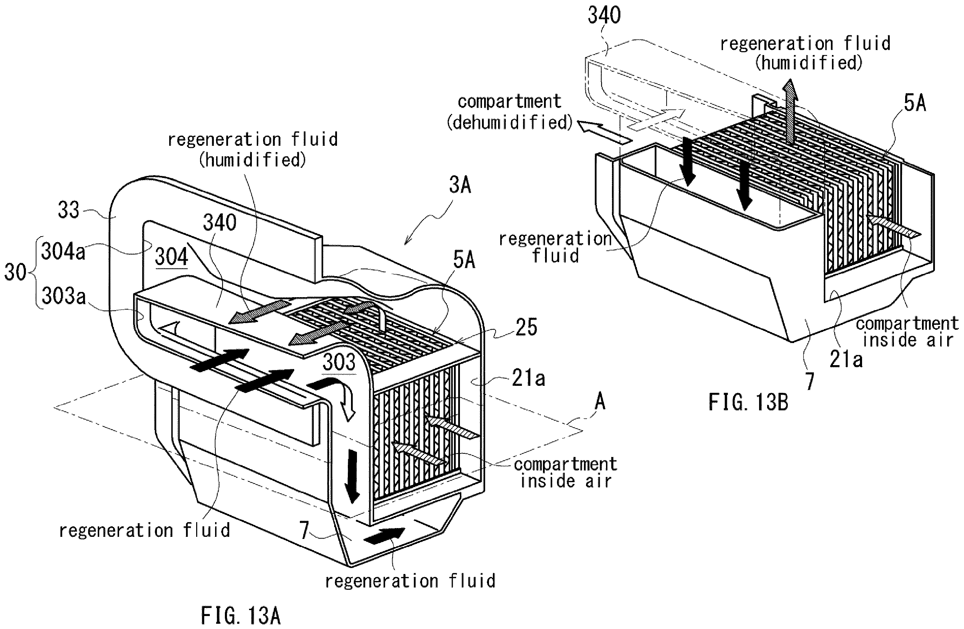

FIG. 13A and FIG. 13B are diagrams explaining flow of air in the inlet part 3A of outside air in the air conditioner 1A. FIG. 13A is a perspective cross section showing the periphery of the inlet part 3A as viewed from the accommodating room 91-side of the engine, and FIG. 13B is a cross section by cutting away the periphery of the inlet part 3A on a plane A in FIG. 13A.

It should be noted that in FIG. 13A and FIG. 13B, illustration of the sirocco fan 11B and illustration of the guide wall 341 are omitted for descriptive purposes.

In the air conditioner 1A according to the embodiment, an internal space of the inlet part 3A is sectioned into a first space 303 and a second space 304 by a partition wall 340.

Therefore an opening 30 of the inlet part 3A is divided into an opening 303a in the first space 303-side and an opening 304a in the second space 304-side.

A second flow passage 7 (refer to FIG. 11A and FIG. 11B) for connection of the opening 303a and the opening 304a is provided to bridge over between the inlet part 3A and the first flow passage 2 in the air conditioner 1A.

The first flow passage 2 is provided with a flow passage 21 and a blower passage 22. The flow passage 21 has the inlet port 21a of air within the vehicle compartment 90 (within the vehicle) on one end in the longitudinal direction thereof.

The blower passage 22 being connecting the flow passage 21 and the temperature adjusting part 10.

A rotor 110 of the sirocco fan 11A is provided in the inside of the blower passage 22. The rotor 110 rotates integrally around an axis line X by a rotational drive force of a motor M1.

When the rotor 110 rotates around the axis line X in the sirocco fan 11A, air is suctioned from a rotational axis (axis line X) direction of the rotor 110, and the suctioned air is sent out in a diameter direction of the axis line X. Therefore in the flow passage 2, the flow passage 21 is connected in the axis line X direction to an area in the blower passage 22 where the rotor 110 is provided.

An intersection area 25 with a second flow passage 7 is provided near the inlet part 21a in the flow passage 21, and a desiccant material 5A is provided in the intersection area 25.

One end of a connecting passage 23 connecting the second flow passage 7 and the flow passage 21 is connected to an area between the intersection area 25 and the sirocco fan 11A in the flow passage 21.

The one end of the connecting passage 23 opens to an inner periphery of the flow passage 21, and an opening 23a of the connecting passage 23 is opened/closed by the partition wall 261 of the switching valve 26.

The other end of the connecting passage 23 opens to an inner periphery of the second flow passage 7.

The partition wall 261 of the switching valve 26 displaces between an inside air introducing position (refer to FIG. 11A) of blocking communication between the second flow passage 7 and the flow passage 21 and an outside air introducing position (refer to FIG. 11B) of establishing communication between the second flow passage 7 and the flow passage 21.

When the partition wall 261 of the switching valve 26 is located in the inside air introducing position, the opening 23a of the connecting passage 23 is closed. In this state, when the sirocco fan 11A is driven, the air (inside air) within the vehicle compartment 90 flows through the inlet part 21a into the flow passage 21. After the inside air having flowed into the flow passage 21 is supplied through the blower passage 22 to the temperature adjusting part 10 after passing the desiccant material 5A.

When the partition wall 261 of the switching valve 26 is located in the outside air introducing position, the opening 23a of the connecting passage 23 is opened.

The sirocco fan 11B is caused to be in a stop state in this state, and meanwhile, the sirocco fan 11A is driven. Then, the air (outside air) outside of the vehicle compartment 90 flows through the openings 303a, 304a of the inlet part 3A into the second flow passage 7. After the outside air having flowed into the second flow passage 7 is supplied through the blower passage 22 to the temperature adjusting part 10 after flowing into the flow passage 21 through the connecting passage 23.

A rotor 110 of the sirocco fan 11B is provided in an area positioned within the second space 304 of the inlet part 3 in the second flow passage 7. The rotor 110 rotates integrally around an axis line X by a rotational drive force of a motor M2. The guide wall 341 is provided between the rotor 110 and the intersection area 25 in the second flow passage 7 (refer to FIG. 12). The guide wall 341 is formed integrally with the partition wall 340. The guide wall 341 narrows a flow passage sectional area of an area between the rotor 110 and the intersection area 25 in the second flow passage 7.

When the rotor 110 rotates around the axis line X in the sirocco fan 11B, air within the second flow passage 7 is suctioned from the rotational axis (axis line X) direction of the rotor 110, and the suctioned air is sent out in the diameter direction of the axis line X.

The guide wall 341 is provided to prevent the suctioned air from the desiccant material 5A-side from passing in a clearance between the rotor 110 and the partition wall 340 at the driving time of the sirocco fan 11B.

When there is present the air that passes the clearance between the rotor 110 and the partition wall 340, since the wind amount (moving speed) of air to be discharged from the opening 304a is lowered, the guide wall 341 is provided to prevent occurrence of this event.

When the sirocco fan 11B is driven in a state where the partition wall 261 of the switching valve 26 is located in the inside air introducing position, the air (outside air) outside of the vehicle compartment 90 is suctioned into the first space 303 from the opening 303a positioned in one end of the second flow passage 7 in the longitudinal direction.

The suctioned air passes the desiccant material 5A provided in the intersection area 25, and thereafter, flows into the second space 304. In addition, the air is discharged outside of the vehicle compartment 90(outside of the vehicle) from the opening 304a positioned in a diameter direction of the axis line X of the rotor 110.

Here, as shown in FIG. 12, in a cross-sectional view the space within the inlet part 3A is sectioned into two spaces composed of the first space 303 and the second space 304 by the above-mentioned partition wall 340.

A tip end 340a of the partition wall 340 in the opening 30-side projects closer to the accommodating room 91-side than the flange part 33 surrounding the opening 30, and the partition wall 340 extends into communicating hole 921 of the fire wall 92.

Here, the second space 304 is positioned closer to the upper side than the first space 303 in a vertical linear direction as a basis of the installation state of the air conditioner 1A.

At the warming operation time in the winter season, the outside air (regeneration fluid) discharged from the second space 304 is higher in humidity and temperature than the outside air (regeneration fluid) flowing into the first space 303.

Therefore the outside air (regeneration fluid) discharged from the second space 304 is lighter than the outside air (regeneration fluid) flowing into the first space 303.

As a result, a mixing degree of the regeneration fluid containing the water components discharged from the opening 304a of the second space 304 and the outside air (regeneration fluid) suctioned to the first space 303-side from the space S1 is made low.

It should be noted that it is preferable that the partition wall 340 according to the embodiment also is formed of a material heat-exchangeable between the space 303 and the space 304, such as metal.

The regeneration fluid flowing into the first space 303-side can be warmed by heat exchange between the regeneration fluid flowing into the first space 303 and the regeneration fluid discharged from the second space 304.

The desiccant material 5A is provided in the intersection area 25 between the second flow passage 7 and the flow passage 21 as described above. The desiccant material 5A is provided to dehumidify the air (inside air) flowing in the flow passage 21.

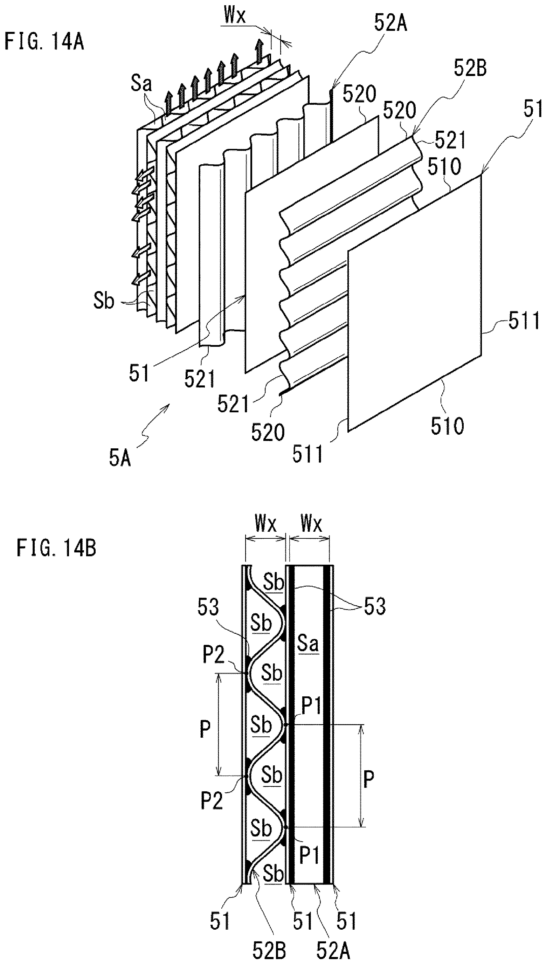

FIGs.14A and 14B are diagrams explaining the configuration of the desiccant material 5A. FIG. 14A is a partially exploded perspective view showing the desiccant material 5A. FIG. 14B is a plan view showing a partial area of the desiccant material 5A as viewed in the flowing direction of air, and is a diagram explaining a basic configuration of the desiccant material 5A.

As shown in FIGs.11A and 11B, a moving direction of the air (outside air) flowing in the second flow passage 7 is perpendicular to a moving direction of the air (inside air) flowing in the flow passage 21 in the intersection area 25 between the second flow passage 7 and the flow passage 21.

As shown in FIGs.14A and 14B, the desiccant material 5A includes a plurality of plate-shaped base members 51 arranged substantially in parallel to each other with a clearance Wx therebetween and a plurality of wavelike base members 52 (52A, 52B), each being disposed between the plate-shaped base members 51, 51.

The wavelike base member 52 is provided between a pair of the plate-shaped base members 51, 51 neighbored in a lining direction of the plate-shaped base members 51.

Here, in the explanation to be made hereinafter, in a case of particularly not distinguishing the wavelike base members 52A and 52B, the wavelike base member 52 will be described simply as the wavelike base member 52A or 52B for descriptive purposes.

The plate-shaped base member 51 is a plate-shaped member formed in a rectangular shape in a front view. Two facing sides 510, 510 of four sides of the plate-shaped base member 51 and two facing sides 511, 511 of the rest each are formed in a linear shape in a side view. The two facing sides 510, 510 and the two facing sides 511, 511 are perpendicular to each other in a front view.

The wavelike base member 52 is a plate-shaped member formed in a rectangular shape in a front view. Two facing sides 520, 520 of four sides of the wavelike base member 52 each are formed in a linear shape in a side view, and two facing sides 521, 521 of the rest each are formed in a wavelike shape in a side view.

The wavelike base member 52 is provided to make alternate contact with the plate-shaped base member 51 positioned in one side and the plate-shaped base member 51 positioned in the other side across the wavelike base member 52.

Contact points P1, P2 of the wavelike base member 52 and the plate-shaped base member 51 are connected by an adhesive member 53.

A clearance P between the contact points P1, P1 of the wavelike base member 52 and the plate-shaped base member 51 positioned in one side of the wavelike base member 52 and a clearance P between the contact points P2, P2 of the wavelike base member 52 and the plate-shaped base member 51 positioned in the other side of the wavelike base member 52 each have the substantially same pitch.

In the desiccant material 5A, the plate-shaped base member 51 and the wavelike base member 52 are alternately arranged. The wavelike base members 52A, 52B neighbored in the lining direction of the plate-shaped base members 51 are arranged in directions different by 90 degrees.

A plurality of spaces Sa, Sb surrounded by the wavelike base members 52A, 52B and a pair of the plate-shaped base members 51, 51 are formed to have the substantially same opening sectional area between a pair of the plate-shaped base members 51, 51. The space Sa formed between the wavelike base member 52A and the plate-shaped base members 51, 51 positioned in both sides of the wavelike base member 52A is perpendicular to the space Sb formed between the wavelike base member 52B and the plate-shaped base members 51, 51 positioned in both sides of the wavelike base member 52B.

In the desiccant material 5A of the embodiment, the regeneration fluid (collection air) flows in the Sa formed by the wavelike base member 52A and the air (air as the dehumidification target: inside air) taken in from the inside of the vehicle compartment 90 flows in the space Sb formed between the wavelike base member 52B.

In the following explanation, the spaces Sa, Sb will be described respectively as flow passages Sa, Sb as well.

In the desiccant material 5A, the wavelike base member 52A (first wavelike base member) forming the flow passage Sa of the regeneration fluid and the wavelike base member 52B (second wavelike base member) forming the flow passage Sb of the air as the dehumidification target are alternately provided in the lining direction of the plate-shaped base members 51.

In the embodiment, the plate-shaped base members 51 and the wavelike base members 52 (52A, 52B) forming the desiccant material 5A each are configured with paper or non-woven cloth allowing adsorption and desorption of water components.

Here, expecting an improvement on an efficiency of adsorption and desorption, it is preferable to cause a material allowing adsorption and desorption of water components such as a polymeric adsorbing material or an inorganic adsorbing material, to be supported on the plate-shaped base member 51 and the wavelike base member 52.

Hereinafter, an explanation will be made of a case where an operating mode of the air conditioner 1A with the above-mentioned configuration is a desiccant mode in which dehumidification of the air (inside air) taken in from the inside of the vehicle compartment 90 is performed in the desiccant material 5A.

In the desiccant mode, the switching valve 26 is operated by an unillustrated control device to locate the partition wall 261 in the inside air introducing position (refer to FIG. 11A).

Thereby the communication between the flow passage 21 of the first flow passage 2 and the second flow passage 7 is blocked to create a state where the air (inside air) only taken in from the inlet port 21a can flow within the flow passage 21.

In this state, the unillustrated control device drives the motor M1 to rotate the rotor 110 of the sirocco fan 11A around the axis line X.

Thereby the air (inside air) within the vehicle compartment 90 flows into the flow passage 21 positioned upstream of the rotor 110 from the inlet port 21a. The inside air having flowed into the flow passage 21 reaches through the flow passage Sb of the desiccant material 5A to the sirocco fan 11A, and after that, is supplied through the blower passage 22 to the temperature adjusting part 10.

Further, the unillustrated control device drives the motor M2 to rotate the rotor 110 of the sirocco fan 11B around the axis line X. Thereby the air outside of the vehicle (regeneration fluid) flows into the second flow passage 7 from the opening 303a. The regeneration fluid having flowed into the second flow passage 7 crosses the intersection area 25 through the flow passage Sa of the desiccant material 5A, and after that, is discharged outside of the vehicle compartment 90 from the opening 304a.

Accordingly, in a case where the operating mode of the air conditioner 1A is the desiccant mode, the regeneration fluid successively flows in the flow passage Sa of the desiccant material 5A, and meanwhile, the air (inside air) taken in from the inside of the vehicle compartment 90 successively flows in the flow passage Sb of the desiccant material 5A.

Therefore the water components contained in the air (inside air) taken in from the inside of the vehicle compartment 90 are adsorbed in the plate-shaped base members 51, 51 and the wavelike base member 52B surrounding the flow passage Sb in the desiccant material 5A.

As a result, the air (inside air) taken in from the inside of the vehicle compartment 90 are dehumidified in the desiccant material 5A.

Further, in the desiccant material 5A the water components adsorbed in the plate-shaped base members 51, 51 and the wavelike base member 52A surrounding the flow passage Sa in which the regeneration fluid flows are taken in the regeneration fluid.

Thereby the water components are desorbed from the plate-shaped base member 51 and the wavelike base member 52A surrounding the flow passage Sa in which the regeneration fluid flows in the desiccant material 5A to activate the desiccant material 5A.

In this way, (1) the water components that are removed from the air (inside air) taken in from the inside of the vehicle compartment 90 and are adsorbed in the area (adsorption area) surrounding the flow passage Sb in the desiccant material 5A move to the area (desorption area) side surrounding the flow passage Sa in which the adsorbing amount of water components is small.

(2) The water components having moved to the area (desorption area) surrounding the flow passage Sa are taken in the air outside of the vehicle (outside air: regeneration fluid) flowing in the flow passage Sa.

Thereby in a state where the air (inside air) taken in from the inside of the vehicle compartment 90 and the regeneration fluid (outside air) successively flow in the flow passage 21 and the second flow passage 7 respectively, the desorption area in the desiccant material 5A is regularly kept in the adsorbing amount of water components smaller than the adsorption area in the desiccant material 5A.

As a result, since the water components adsorbed in the area (adsorption area) surrounding the flow passage Sb in the desiccant material 5A regularly move to the area (desorption area) side surrounding the flow passage Sa in the desiccant material 5A, the adsorbing amount of water components is not saturated in the desiccant material 5A.

Therefore in a case where the adsorbing amount of water components is saturated in the desiccant material as in a case of the conventional desiccant material, there does not occur the need of, for example, driving the heater to execute the regeneration treatment of the desiccant material. That is, only by causing the regeneration fluid to successively flow, it is possible to successively perform the dehumidification of the air-conditioned air (air of the dehumidification target).

In a case of dehumidifying the compartment air (inside air) taken in from the inside of the vehicle compartment 90 by the desiccant material 5A in the air conditioner 1A of the embodiment, the opening 303a of the inlet part 3A functions as an inflow port of the regeneration fluid (outside air). Further, the opening 304a of the inlet part 3A functions as a discharge port of the regeneration fluid (outside air). (refer to FIG. 11A) .

Further, in a case where the dehumidification using the desiccant material 5A is not performed, the sirocco fan 11B is made to a stop state and meanwhile, by driving the sirocco fan 11A the opening 303a and the opening 304a of the inlet part 3 function as inlet ports of the compartment outside air (outside air) (refer to FIG. 11B).

That is, in the air conditioner 1A, the air taken in from the outside of the vehicle compartment 90 is supplied to the desiccant material 5A and at least a part of flow passages used for activating the desiccant material 5A is commonly used as a flow passage for supplying the air taken in from the outside of the vehicle compartment 90 to the temperature adjusting part 10-side.

Therefore a length of the flow passage in the air conditioner 1A for flow of the air is shortened by the length amount of the flow passage commonly used.

In addition, since there is created an allowance for arrangement of the flow passage in the air conditioner 1A by the length amount of the flow passage commonly used, a freedom degree of the installation of the air conditioner 1A improves.

Here, as in a case of the example as described above, when the three openings composed of the inlet port 35, the inflow port 36 and the communicating port 192 open within the internal space 300, three flow passages for supply/discharge of the air (regeneration fluid, outside air) to/from the three openings are required to be set within the inlet part 3.

However, since a volume of the internal space in the inlet part 3 is limited, when the three flow passages are set corresponding to the three openings, a flow passage sectional area of each of the flow passages is made small. As a result, a resistance to the air flowing in each of the flow passages is made large.

On the other hand, as in a case of the air conditioner 1A, there are two openings (openings 303a, 304a) that are provided in the inlet part 3A for supply/discharge of the air. Therefore, since it is possible to take a flow passage sectional area of the flow passage (second flow passage 7) of air extending from the openings 303a, 304a wide, the resistance to the air flowing in the flow passage can be made small.

The air conditioner 1A according to the embodiment has the configuration as follows.

(12) The vehicular air conditioner 1A includes:
the desiccant material 5A that enables adsorption of water components contained in air of a dehumidification target and release of the adsorbed water components to regeneration fluid (collection air);
the first flow passage 2 in which the air of the dehumidification target flows; and
the second flow passage 7 in which the regeneration fluid flows.

The desiccant material 5A is provided in the intersection area 25 between the first flow passage 2 and the second flow passage 7.

The water components contained in the air of the dehumidification target are caused to be adsorbed to the desiccant material 5A to dehumidify the air of the dehumidification target.

The air of the dehumidification target is the compartment inside air (inside air) taken in from the inside of the vehicle compartment 90.

At least a part of the second flow passage 7 can be used as an introducing passage of the air outside of the vehicle compartment 90 to the temperature adjusting part 10.

With this configuration, in any one of a case of using the air outside of the vehicle compartment 90 for activation of the desiccant material 5A and a case of using the air outside of the vehicle compartment 90 for adjustment of the air-conditioned air in the temperature adjusting part 10, the second flow passage 7 can be used.

Thereby since at least a part of the second flow passage 7 is commonly used in two different applications, a length of the flow passage for passage of the air in the air conditioner 1A is shortened by the length amount of the flow passage commonly used.

In addition, since there is created an allowance for arrangement of the flow passage in the air conditioner 1A by the length amount of the flow passage commonly used, the freedom degree of the installation of the air conditioner 1A improves.

In addition, in a case of the air conditioner 1A, there are two openings (openings 303a, 304a) that are provided in the inlet part 3A for supply/discharge of the air. Therefore, since it is possible to take a flow passage sectional area of the flow passage (second flow passage 7) of air extending from the openings 303a, 304a wide, the resistance to the air flowing in the flow passage can be made small.

The air conditioner 1A according to the embodiment has the configuration as follows.

(13) The first flow passage 2 connects the inlet port 21a of the air within the vehicle compartment 90 and the temperature adjusting part 10.

The connecting passage 23 connecting the first flow passage 2 and the second flow passage 7 is provided.

In the first flow passage 2, the connecting passage 23 is connected to the downstream side of the intersection area 25 in the flowing direction of the air in the first flow passage 2.

In the second flow passage 7, the connecting passage 23 is connected to the upstream side of the intersection area 25 in the flowing direction of the air in the second flow passage 7 in a case where the operating mode of the air conditioner 1A is a desiccant mode.

With this configuration, only by adding the connecting passage 23 connecting the first flow passage 2 and the second flow passage 7, the second flow passage 7 can be used in any one of cases of using the air outside of the vehicle compartment 90 for activation of the desiccant material 5A and for adjustment of the air-conditioned air in the temperature adjusting part 10.

It should be noted that in the first flow passage 2 the connecting passage 23 may be connected to the upstream side of the intersection area 25. In the second flow passage 7 the connecting passage 23 may be connected to the downstream side of the intersection area 25.

The downstream side herein means the downstream side of the intersection area 25 in the flowing direction of the air in the second flow passage 7 in a case where the operating mode of the air conditioner 1A is the desiccant mode.

The air conditioner 1A according to the embodiment has the configuration as follows.

(14) The opening 303a as the inlet port of the regeneration fluid (outside air) to be supplied to the second flow passage 7 and the opening 304a as the discharge port of the regeneration fluid to be discharged from the second flow passage 7 are provided by using the communicating hole 921 as the existing opening part of the fire wall 92 (sectioning wall).

With this configuration, in a case of the air conditioner 1A, there are two openings (openings 303a, 304a) that are provided in the inlet part 3A for supply/discharge of the air. Therefore, since it is possible to take a flow passage sectional area of the flow passage of air extending from the openings 303a, 304a wide, a resistance to the air flowing in the flow passage can be made small.

In addition, since the openings 303a, 304a are provided by using the existing opening part of the fire wall 92 sectioning the accommodating room 91 of the engine and the vehicle compartment 90, it is not necessary to provide opening parts as the inlet port and the discharge port of the regeneration fluid separately.

In a case of providing a new opening part in the fire wall 92, since there is a limit to the position of being capable of providing the opening part, a freedom degree of installation of the air conditioner 1 (mounting performance) is limited. On the other hand, the freedom degree of installation of the air conditioner 1 (mounting performance) improves by using the communicating hole 921 as the existing opening part.

The air conditioner 1A has the configuration as follows.

(15) The intersection area 25 between the first flow passage 2 and the second flow passage 7 is an area where the air (inside air) of the dehumidification target regularly flows at the time the air conditioner 1 is driven.

For example, in the desiccant mode to be executed at the warming operation time in the winter season, outside air successively flows in an area (flow passage Sa) positioned within the second flow passage 7 in the desiccant material 5A, and air (inside air) of the dehumidification target successively flows in an area (flow passage Sb) positioned within the flow passage 21 in the desiccant material 5A.

Therefore the desiccant material 5A is kept in a substantially intermediate temperature between a temperature of the outside air flowing in the second flow passage 7 and a temperature of the air of the dehumidification target flowing in the flow passage 21.

Here, in a case where the desiccant material 5A is provided in an area where the air of the dehumidification target intermittently flows, the desiccant material 5A is cooled by the outside air lower in temperature than the air of the dehumidification target while the air of the dehumidification target does not flow, and is kept in a temperature lower than the air of the dehumidification target.

In addition, when the temperature of the desiccant material 5A is lower than that of the air (inside air) of the dehumidification target, as the air (inside air) of the dehumidification target is supplied to the area where the desiccant material 5A is provided, the desiccant material 5A is warmed by the supplied air (inside air).

Then, the water components adsorbed in the desiccant material 5A are desorbed, and the air (inside air) of the dehumidification target is possibly humidified by the desorbed water components.

In this case, the air to be originally dehumidified is temporarily humidified and the humidified air is finally supplied to the inside of the vehicle compartment 90.

As described above, the desiccant material 5A is provided in the area where the air (inside air) of the dehumidification target regularly flows, in the air conditioner 1A.

Therefore the desiccant material 5A is warmed by the air (inside air) of the dehumidification target.

Accordingly, there is no possibility that as in a case where the air (inside air) of the dehumidification target high in temperature is supplied to the desiccant material 5A cooled by the outside air, the water components adsorbed in the desiccant material 5A are desorbed and the air (inside air) of the dehumidification target is humidified by the desorbed water components.

In this way, even if the desiccant mode is started at the warming operation time in the winter season, there is no possibility that the water components adsorbed in the desiccant material 5A are desorbed and the air (inside air) of the dehumidification target is humidified by the desorbed water components.

Accordingly, the water components of the inside air can be caused to be adsorbed in the area (adsorption area) positioned within the flow passage 21 in the desiccant material 5A, and the water components can be caused to be desorbed from the area (desorption area) positioned within the second flow passage 7 to be taken in the regeneration fluid.

The air conditioner 1A has the configuration as follows. (16) The existing opening part is the opening part used as the inlet port (outside air inlet port) of the air outside of the vehicle compartment 90 in the air conditioner 1A.

With this configuration, since the outside air inlet port of the air conditioner 1A is formed with a sufficient opening diameter, the regeneration fluid can be taken in the desiccant material 5A-side by using the outside air inlet port without influencing the inlet amount of the outside air into the air conditioner 1A.

The dehumidification of the air (inside air) of the dehumidification target is primarily required at the time of air-conditioning the inside of the vehicle compartment 90 while circulating the air within the vehicle compartment 90. Here, the taking-in of the outside air into the air conditioner 1A is not performed while circulating the air within the vehicle compartment 90.

Therefore, even when the second flow passage 7 in which the regeneration fluid flows is commonly used as the flow passage for supplying the air taken in from the outside of the vehicle compartment 90 to the temperature adjusting part 10-side, it does not give any influence on the air-conditioning by the air conditioner 1A.

The air conditioner 1A has the configuration as follows. (17) The air conditioner 1A has the inlet part 3A (communicating room) communicated with the communicating hole 921 as the existing opening part.

The inlet part 3A is communicated with the accommodating room 91 of the engine through the communicating hole 921.

In the inlet part 3A the opening 304a as the discharge port of the regeneration fluid flowing in the second flow passage 7 opens closer to the upper side in a vertical linear direction on a basis of the installation state of the air conditioner 1A than the opening 303a as the inlet port of the regeneration fluid flowing in the second flow passage 7.

In a case where the operating mode of the air conditioner 1A is the desiccant mode, the regeneration fluid discharged from the opening 304a of the second flow passage 7 contains many water components desorbed from the desiccant material 5A.

Therefore, when the regeneration fluid that is discharged from the opening 304a and contains many water components is taken in from the opening 303a as the outside air inlet port of the second flow passage 7, the regeneration fluid containing many water components is supplied to the desiccant material 5A to block the desorption of the water components from the desiccant material 5A.

The regeneration fluid having passed the desiccant material 5A contains many water components taken in from the desiccant material 5A, and is air high in absolute humidity. Here, as the air is the higher in absolute humidity, the air is the smaller in air density, and becomes the lighter.

Accordingly, since the regeneration fluid is higher in absolute humidity after passing the desiccant material 5A than before, the regeneration fluid is lighter after passing the desiccant material 5A than before.

As a result, when the opening 304a as the discharge port of the regeneration fluid is located closer to the upper side than the opening 303a as the inlet port, there is a higher tendency that the discharged regeneration fluid moves in an upward side as a direction of being away from the opening 303a as the inlet port.

Therefore the regeneration fluid immediately after being discharged from the opening 304a as the discharge port is taken in from the opening 303a as the inlet port to make it difficult to be supplied to the desiccant material 5A.

That is, with this configuration as described above, the amount of the regeneration fluid taken in the opening 303a after being discharged from the opening 304a can be made small.

Accordingly, since the regeneration fluid immediately after being discharged from the opening 304a as the discharge port contains many water components, the regeneration fluid containing many water components is difficult to be supplied to the desiccant material 5A-side. Thereby it is possible to appropriately suppress a reduction in a desorption efficiency of the water components in the desiccant material 5A.

That is, the desorption of the water components from the desiccant material 5A can be more appropriately performed.

The air conditioner 1A has the configuration as follows. (18) The partition wall 340 is provided in the inside of the inlet part 3A for partition between the first space 303 in the opening 303a-side and the space in the opening 304a-side.

It is possible to appropriately prevent the mixing of the regeneration fluid flowing in the first space 303 from the opening 303a through the communicating hole 921 and the regeneration fluid discharged through the opening 304a from the second space 304 after passing the desiccant material 5A.

Since the regeneration fluid discharged through the opening 304a from the second space 304 contains many water components, it can be appropriately prevented that the regeneration fluid containing many water components is supplied to the desiccant material 5A to block the desorption of the water components from the desiccant material 5A.

The present invention is not limited to the embodiment and the modifications as described above. The present invention is changeable as needed within the scope of the claims of the present invention.

### DESCRIPTION OF REFERENCE SIGNS

1, 1A Air conditioner
10 Temperature adjusting part
11A Sirocco fan
11B Sirocco fan
110 Rotor
12 Evaporator
13 Heater core
14 Mix door
15 Mixing part
16 Defroster duct
161 Blow port
17 Vent duct
18 Foot duct
19 Inflow room
190 Boundary wall
191 Switching valve
192 Communicating port
2 First flow passage
21 Flow passage
21a Inlet port
22 Blower passage
23 Connecting passage
23a Opening
25 Intersection area
26 Switching valve
261 Partition wall
3, 3A Inlet part 30 Opening
300 Internal space
301 Space
302 Space
303 First space
303a Opening
304 Second space
304a Opening
31 Peripheral wall part
310 Side wall
32 Bottom wall part
33 Flange part
33a Facing surface
34 Partition wall
34a One end
340 Partition wall
340a Tip end
341 Guide wall
35 Inlet port
36 Inflow port
37 Throttle part
39 Discharge port
4 Dehumidification mechanism part
41 Inlet tube
42 Duct
43 Sirocco fan
44 Intersection area
5, 5A desiccant material
51 Plate-shaped base member
52 (52A, 52B) Wavelike base member
53 Adhesive agent
6 (6A, 6B) Tubular base member
60 Tubular base member
601 Side part
602 Side part
61 Wavelike base member
62 Adhesive agent
7 Second flow passage
90 Vehicle compartment
91 Accommodating room of engine
92 Fire wall
921 Communicating hole
93 Cowl box
94 Wiper installation part
941 Bottom wall
942 Communicating hole
95 Hood
96 Guide wall
M1, M2 Motor
P1, P2 Contact point
PS Drive source
S1 space
S2 Space
S3 Space (flow passage)
Sx Clearance
Sa Space (flow passage)
Sb Space (flow passage)
V Vehicle
W Windshield

## Claims

1. A vehicular air conditioner (1A) to be mounted on a vehicle comprising:
a desiccant material (5A) that enables adsorption of water components contained in air of a dehumidification target and release of the adsorbed water components to collection air;
a first flow passage (2) in which the air of the dehumidification target flows; and
a second flow passage (7) in which the collection air flows,
the desiccant material (5A) being provided to bridge over between the first flow passage (2) and the second flow passage (7), and the water components contained in the air of the dehumidification target being caused to be adsorbed to the desiccant material (5A) to dehumidify the air of the dehumidification target, **characterized in that**:
an opening (303a) as an inlet port and an opening (304a) as a discharge port of the collection air in the second flow passage (7) are provided by using a communicating hole (921) in a fire wall (92) which sections an accommodating room of a drive source and a vehicle compartment, and the communicating hole (921) is an opening part used as an inlet port of air outside of the vehicle compartment of the vehicular air conditioner (1A), and
the opening (304a) is disposed at upper side in a vertical direction than the opening (303a) on an installation state on the vehicle of the air conditioner (1A).

2. The vehicular air conditioner according to claim 1, wherein
the desiccant material (5A) is provided in an intersection area (25) where the first flow passage (2) and the second flow passage (7) intersect.

3. The vehicular air conditioner according to claim 1 or claim 2, further comprising:
a connecting passage (23) connecting the first flow passage (2) and the second flow passage (7), the connecting passage (23) allows the introduction of the collection air into the first flow passage (2) that is taken in the second flow passage (7) from outside of the vehicle.

4. The vehicular air conditioner according to claim 3, further comprising:
a sirocco fan (11A) is disposed in the first flow passage (2), the sirocco fan (11A) being able to cause a continuous flow of the air of the dehumidification target in the intersection area (25) at the driving time of the air conditioner.

5. The vehicular air conditioner according to claim 4, further comprising:
the connecting passage (23) is connected to an area between the intersection area (25) and the sirocco fan (11A) in the first flow passage (2).

6. The vehicular air conditioner according to any one of claims 1 to 5, further comprising:
an inlet part (3A) communicated with the accommodating room (91) of the drive source through the communicating hole (921), and
a partition wall (340) provided within the inlet part (3A) for partition of a space (303) in the opening (303a) side and a space (304) in the opening (304a) side.

7. The vehicular air conditioner according to claim 6, wherein
the partition wall (340) is made of material capable of heat-exchange between the collection air flowing in the space (303) and the collection air flowing in the space (304).

## Patentansprüche

1. Fahrzeugklimaanlage (1A), die an einem Fahrzeug montiert werden soll, umfassend:
ein Trocknungsmaterial (5A), das die Adsorption von in der Luft eines Entfeuchtungsziels enthaltenen Wasserbestandteilen und die Freisetzung der adsorbierten Wasserbestandteile an Sammelluft ermöglicht;
einen ersten Strömungskanal (2), in dem die Luft des Entfeuchtungsziels strömt; und
einen zweiten Strömungskanal (7), in dem die Sammelluft strömt,
wobei das Trocknungsmaterial (5A) zur Überbrückung zwischen dem ersten Strömungskanal (2) und dem zweiten Strömungskanal (7) vorgesehen ist und die in der Luft des Entfeuchtungsziels enthaltenen Wasserbestandteile dazu veranlasst werden, von dem Trocknungsmaterial (5A) zur Entfeuchtung der Luft des Entfeuchtungsziels adsorbiert zu werden, **dadurch gekennzeichnet, dass**:
eine Öffnung (303a) als ein Einlassanschluss und eine Öffnung (304a) als ein Austrittsanschluss der Sammelluft in dem zweiten Strömungskanal (7) vorgesehen sind, indem ein Verbindungsloch (921) in einer Feuerschutzwand (92), die einen Aufnahmeraum einer Antriebsquelle und einen Fahrzeuginnenraum voneinander trennt, verwendet wird, und das Verbindungsloch (921) ein Öffnungsteil ist, der als ein Einlassanschluss von Luft von außerhalb des Fahrzeuginnenraums der Fahrzeugklimaanlage (1A) verwendet wird, und
die Öffnung (304a) an einer oberen Seite in einer senkrechten Richtung als die Öffnung (303a) auf einem Installationszustand an dem Fahrzeug der Klimaanlage (1A) angeordnet ist.

2. Fahrzeugklimaanlage nach Anspruch 1, wobei das Trocknungsmaterial (5A) in einem Überschneidungsbereich (25) vorgesehen ist, in dem sich der erste Strömungskanal (2) und der zweite Strömungskanal (7) überschneiden.

3. Fahrzeugklimaanlage nach Anspruch 1 oder Anspruch 2, ferner umfassend:
einen Verbindungskanal (23), der den ersten Strömungskanal (2) mit dem zweiten Strömungskanal (7) verbindet, wobei der Verbindungskanal (23) das Einleiten der Sammelluft in den ersten Strömungskanal (2) gestattet, die in dem zweiten Strömungskanal (7) von außerhalb des Fahrzeugs aufgenommen wird.

4. Fahrzeugklimaanlage nach Anspruch 3, ferner umfassend:
ein Sirocco-Ventilator (11A) ist in dem ersten Strömungskanal (2) angeordnet, wobei der Sirocco-Ventilator (11A) in der Lage ist, einen kontinuierlichen Strom der Luft des Entfeuchtungsziels in dem Überschneidungsbereich (25) während der Antriebszeit der Klimaanlage zu bewirken.

5. Fahrzeugklimaanlage nach Anspruch 4, ferner umfassend:
der Verbindungskanal (23) ist mit einem Bereich zwischen dem Überschneidungsbereich (25) und dem Sirocco-Ventilator (11A) in dem ersten Strömungskanal (2) verbunden.

6. Fahrzeugklimaanlage nach einem der Ansprüche 1 bis 5, ferner umfassend:
einen Einlassteil (3A), der mit dem Aufnahmeraum (91) der Antriebsquelle durch das Verbindungsloch (921) in Verbindung steht, und
eine Trennwand (340), die innerhalb des Einlassteils (3A) vorgesehen ist, um einen Raum (303) in der Öffnungsseite (303a) und einen Raum (304) in der Öffnungsseite (304a) voneinander zu trennen.

7. Fahrzeugklimaanlage nach Anspruch 6, wobei die Trennwand (340) aus einem Material hergestellt ist, das zu einem Wärmeaustauch zwischen der Sammelluft, die in dem Raum (303) strömt, und der Sammelluft, die in dem Raum (304) strömt, in der Lage ist.

## Revendications

1. Un climatiseur de véhicule (1A) destiné à être monté sur un véhicule comprenant :
un matériau absorbeur d'humidité (5A) qui permet l'adsorption de composants d'eau contenus dans l'air d'une cible de déshumidification et la libération des composants d'eau vers l'air de collecte ;
un premier passage d'écoulement (2) dans lequel s'écoule l'air de la cible de déshumidification ; et
un second passage d'écoulement (7) dans lequel s'écoule l'air de collecte,
le matériau absorbeur d'humidité (5A) étant prévu à cheval entre le premier passage d'écoulement (2) et le second passage d'écoulement (7), et les composants d'eau contenus dans l'air de la cible de déshumidification étant amenés à être adsorbés sur le matériau absorbeur d'humidité (5A) pour déshumidifier l'air de la cible de déshumidification, **caractérisé en ce que** :
une ouverture (303a) en tant qu'orifice d'entrée et une ouverture (304a) en tant qu'orifice d'évacuation de l'air de collecte dans le second passage d'écoulement (7) sont fournies en utilisant un trou de communication (921) dans une cloison pare-feu (92) qui sépare une chambre de stockage d'une source d'entraînement et un habitacle de véhicule, et le trou de communication (921) est une partie d'ouverture utilisée en tant qu'orifice d'entrée d'air à l'extérieur de l'habitacle de véhicule du climatiseur de véhicule (1A), et
l'ouverture (304a) est disposée au niveau d'un côté plus haut dans une direction verticale que l'ouverture (303a) dans un état d'installation du climatiseur (1A) sur le véhicule.

2. Le climatiseur de véhicule selon la revendication 1, dans lequel
le matériau absorbeur d'humidité (5a) est fourni dans une zone d'intersection (25) où se croisent le premier passage d'écoulement (2) et le second passage d'écoulement (7).

3. Le climatiseur de véhicule selon la revendication 1 ou la revendication 2, comprenant en outre :
un passage de liaison (23) reliant le premier passage d'écoulement (2) et le second passage d'écoulement (7), le passage de liaison (23) permet l'introduction de l'air de collecte dans le premier passage d'écoulement (2) qui est prélevé dans le second passage d'écoulement (7) depuis l'extérieur du véhicule.

4. Le climatiseur de véhicule selon la revendication 3, comprenant en outre :
un ventilateur sirocco (11A) qui est disposé dans le premier passage d'écoulement (2), le ventilateur sirocco (11A) étant apte à amener un écoulement continu de l'air de la cible de déshumidification dans la zone d'intersection (25) au moment de l'activation du climatiseur.

5. Le climatiseur de véhicule selon la revendication 4, comprenant en outre :
le passage de liaison (23) qui est relié à une zone entre la zone d'intersection (25) et le ventilateur sirocco (11A) dans le premier passage d'écoulement (2).

6. Le climatiseur de véhicule selon l'une quelconque des revendications 1 à 5, comprenant en outre :
une partie d'entrée (3A) en communication avec la chambre de stockage (91) de la source d'entraînement à travers le trou de communication (921), et
une cloison de séparation (340) fournie à l'intérieur de la partie d'entrée (3A) pour la séparation d'un espace (303) dans le côté ouverture (303a) et d'un espace (304) dans le côté ouverture (304a).

7. Le climatiseur de véhicule selon la revendication 6, dans lequel
la cloison de séparation (340) est composée de matériau apte à un échange de chaleur entre l'air de collecte s'écoulant dans l'espace (303) et l'air de collecte s'écoulant dans l'espace (304).
